# EUROPÄISCHE PATENTSCHRIFT

(11) **EP 3 684 545 B1**
(45) Veröffentlichungstag und Bekanntmachung des Hinweises auf die Patenterteilung: **03.11.2021**
(21) Anmeldenummer: 18759097.1
(22) Anmeldetag: 22.08.2018
(51) Int. Cl.: B23K 37/04, B21D 28/06, B21D 43/28, B21D 45/02, B23K 37/047, B23K 26/08, B23K 26/38, B26D 7/18, B65G 47/91, B23K 101/18

(54) **VERFAHREN ZUM FESTLEGEN VON AUSHEBEPOSITIONEN UND/ODER VON HALTEPOSITIONEN, VORRICHTUNG ZUM ENTNEHMEN EINES WERKSTÜCKTEILS UND BEARBEITUNGSMASCHINE**
METHOD FOR FIXING LIFTING-OUT POSITIONS AND/OR HOLDING POSITIONS, DEVICE FOR REMOVING A WORKPIECE PART AND PROCESSING MACHINE
PROCÉDÉ DESTINÉ À DÉFINIR DES POSITIONS DE RETRAIT ET/OU DES POSITIONS DE RETENUE, DISPOSITIF DESTINÉ À RETIRER UNE PARTIE DE PIÈCE ET MACHINE D'USINAGE

(30) Priorität: 22.09.2017 DE 102017216828
(43) Veröffentlichungstag der Anmeldung: 29.07.2020
(73) Patentinhaber: Trumpf Werkzeugmaschinen GmbH + Co. KG, 71254 Ditzingen (DE)
(72) Erfinder: OTTNAD, Jens, 76199 Karlsruhe (DE); WIPPER, Joachim, 71254 Ditzingen (DE)
(74) Vertreter: Kohler Schmid Möbus Patentanwälte
(86) Internationale Anmeldenummer: PCT/EP2018/072649
(87) Internationale Veröffentlichungsnummer: WO 2019/057432

(56) Entgegenhaltungen:
- WO-A1-2007/134631
- WO-A1-2015/176931
- JP-A- H04 187 333
- US-A1- 2016 021 982

## Beschreibung

Die vorliegende Erfindung betrifft ein Verfahren zum Festlegen von Aushebepositionen von mindestens zwei jeweils eine Mehrzahl von Aushebeelementen aufweisenden Aushebevorrichtungen und/oder von Haltepositionen von mindestens zwei jeweils eine Mehrzahl von Halteelementen aufweisenden Haltevorrichtungen für das Entnehmen eines (plattenförmigen) Werkstückteils aus einem Restwerkstück, wobei die Aushebevorrichtungen und/oder die Haltevorrichtungen parallel zu einer Lagerungsebene des aus dem Restwerkstück zu entnehmenden Werkstückteils bewegbar sind. Die Erfindung betrifft auch eine zugehörige Vorrichtung zum Entnehmen eines (plattenförmigen) Werkstückteils aus einem Restwerkstück und eine Bearbeitungsmaschine zum trennenden Bearbeiten von plattenartigen Werkstücken, insbesondere von Blechen.

Aus WO 2015176931A1 (Basis für den Oberbegriff der Ansprüche 1 und 19) ist es bekannt, freigeschnittene Werkstückteile eines plattenartigen Werkstücks mit Hilfe einer Aushebevorrichtung mit Aushebeeinrichtungen in Form von Aushebestiften und einer Haltevorrichtung (Gegenhalter) mit Halteeinrichtungen in Form von Sauggreifern aus dem Restwerkstück zu entnehmen. Bei einem solchen Entnahmeverfahren ist die Positionierung der Aushebestifte und des Gegenhalters bzw. der Sauggreifer entscheidend für die Prozesssicherheit der Entnahme der Werkstückteile. Sind mehrere Aushebestifte auf einer bewegbaren Aushebevorrichtung angeordnet, so ist es entscheidend, die Aushebevorrichtung geeignet relativ zu dem Werkstückteil zu positionieren. Sind mehrere Aushebevorrichtungen auf einer gemeinsamen Tragstruktur, beispielsweise einer Längsschiene bzw. einem Tragbalken, verfahrbar angeordnet, so müssen bei der Positionierung die gemeinsamen Verfahrwege der Aushebevorrichtungen sowie die potenziellen Kollisionsbereiche berücksichtigt werden, da diese bezüglich einer Koordinatenrichtung (X-Richtung oder Y-Richtung) stets dieselbe Position aufweisen. Dies gilt analog im Fall mehrerer Haltevorrichtungen, die ggf. ebenfalls an einer gemeinsamen Tragstruktur angebracht sind, um diese gemeinsam zu verfahren.

Bei der Festlegung der Aushebepositionen derartiger Aushebevorrichtungen müssen darüber hinaus weitere Randbedingungen berücksichtigt werden: Spezifische Verfahrbereiche der einzelnen Aushebevorrichtungen müssen eingehalten werden, welche zudem die Kollisionsfreiheit der Aushebeeinrichtungen mit den Tragstrukturen als auch die Kollisionsfreiheit der Aushebestifte mit einer Rasterung des Werkstückauflagetisches gewährleisten. Weitere Randbedingungen sind: Mindestabstände zwischen den Aushebevorrichtungen müssen gewährleistet werden; die Aushebestifte der Aushebevorrichtungen sind derart zu platzieren, dass die Durchbiegung des Werkstückteils beim Ausheben idealer Weise minimiert wird, so dass das Werkstückteil verkantungs- und verhakungsfrei entnommen werden kann. Zudem müssen hinreichend viele Aushebestifte zum Ausheben nutzbar sein, damit die Ausdrückkraft ausreicht. Die als Gegenhalter dienenden Haltevorrichtungen müssen so über den Aushebevorrichtungen positioniert werden, dass alle erforderlichen Aushebestifte aktiviert werden können. Zudem ist es erforderlich, dass die als Gegenhalter dienenden Haltevorrichtungen relativ zum Werkstückteil derart positioniert sind, dass die erforderliche Tragkraft mit den aktiven Sauggreifern erreicht wird.

Aus DE19616204A1 ist es bekannt, beim Ausdrücken von Teilen mit Hilfe von Stiften eine Auswahl von Stiften bzw. von Stützplatten zu treffen, die für das Hochdrücken nur der gewünschten Teile erforderlich sind. Bei dem Verfahren werden Stifte bzw. Stützplatten ausgewählt, die innerhalb eines umschriebenen Vierecks des auszudrückenden Teils liegen, wobei diejenigen Stifte bzw. Stützplatten, die einen Greifer stören, nicht berücksichtigt bzw. entfernt werden.

Aus DE102015223062B3 sind Verfahren und Vorrichtungen zum Bewegen und/oder Entladen eines Werkstückausschnitts bekannt geworden. Bei einem Verfahren wird ein an der von der Werkstückauflage abliegenden Seite des Werkstückausschnitts angeordnetes und senkrecht zu einer Werkstückhauptebene wirksames Widerlager für den Werkstückausschnitt gemeinsam mit dem Werkstückausschnitt in einer Bewegungsrichtung parallel zu einer Werkstückhauptebene bewegt.

In EP2177293B1 wird ein Verfahren zum Entnehmen eines Werkstückteils aus einem Restwerkstück beschrieben, bei dem das zu entnehmende Werkstückteil mit seinem Schwerpunkt über einem Auflageelement positioniert wird, bevor das Werkstückteil aus dem Restwerkstück entnommen wird.

In der JP H04 187333 A ist eine Entnahmevorrichtung beschrieben, die Hebemittel aufweist, die von einer Metallplatte getrennte Metallplatten-Teile nach oben über die mit Klemmmitteln geklemmte Metallplatte anheben, um auf diese Weise das Herausnehmen der Metallplatten-Teile zu vereinfachen.

In der WO 2007/134631 A1 ist ein Verfahren zum Optimieren einer Anordnung von Tragpunktspitzen an Auflageelementen einer Werkzeugauflage beschrieben. Die Werkzeugauflage dient zur Aufnahme eines Werkstücks in einer Bearbeitungsanlage, in der das Werkstück mit einem Schneidstrahl bearbeitet wird. Das Optimieren erfolgt unter Verwendung von Daten einer Schachtelung von Gut- und Restteilen.

In der US 2016/021982 A1 ist eine Vorrichtung zum Ausrichten von Materialien zum Herstellen eines Artikels beschrieben. Die Vorrichtung umfasst eine Anordnung von beweglichen Stiften. Jeder Stift kann durch ein programmierbares Aktuatorarray ausgefahren und / oder eingefahren werden. Die bestimmten Stifte, die verlängert werden sollen, können auf einem Muster für den herzustellenden Artikel basieren.

### Aufgabe der Erfindung

Der vorliegenden Erfindung liegt die Aufgabe zugrunde, ein Verfahren, eine Vorrichtung und eine Bearbeitungsmaschine bereitzustellen, welche die Prozesssicherheit bei der Entnahme eines Werkstückteils aus einem Restwerkstück verbessern, indem ein Verkanten oder Verhaken des Werkstückteils im Restwerkstück möglichst vermieden wird.

### Gegenstand der Erfindung

Die Aufgabe wird gelöst durch ein Verfahren der eingangs genannten Art, umfassend die Schritte: a) Bestimmen einer das zu entnehmende Werkstückteil umschließenden, insbesondere rechteckigen Umschließungskontur, b) Initiales Festlegen von Aushebepositionen von mindestens zwei der Aushebevorrichtungen und/oder von Haltepositionen von mindestens zwei der Haltevorrichtungen relativ zur Umschließungskontur c) Festlegen eines Wirkbereichs für jede der Aushebevorrichtungen bei ihrer jeweils festgelegten Aushebeposition und/oder für jede der Haltevorrichtungen bei ihrer jeweils festgelegten Halteposition, sowie d) Erneutes Festlegen der Aushebepositionen der Aushebevorrichtungen und/oder der Haltepositionen der Haltevorrichtungen anhand eines in einem jeweiligen Wirkbereich positionierten Flächenbereichs des zu entnehmenden Werkstückteils (siehe Anspruch 1).

Bei den Aushebe- bzw. Haltepositionen handelt es sich um zweidimensionale Koordinaten (z.B. X/Y-Koordinaten) parallel zur Lagerungsebene des zu entnehmenden Werkstückteils. Die Aushebe- bzw. Haltepositionen werden relativ zu dem zu entnehmenden Werkstückteil definiert bzw. festgelegt. Die Aushebe- bzw. Haltevorrichtungen können in der Regel zusätzlich zu einer zweidimensionalen Bewegung, beispielsweise einer Verschiebung, die parallel zur Lagerungsebene stattfindet, auch in einer Richtung senkrecht zur Lagerungsebene (z.B. Z-Richtung) bewegt, beispielsweise verschoben, werden, um das Werkstückteil mit Hilfe der Aushebe- bzw. Halteelemente aus dem Restwerkstück zu entnehmen. Die Festlegung der Positionen der Aushebe- bzw. Haltevorrichtungen senkrecht zur Lagerungsebene (Z-Richtung) ist nicht Gegenstand des hier beschriebenen Verfahrens.

An der Aushebe- bzw. Halteposition wird für die Entnahme des Werkstückteils aus dem Restwerkstück typischerweise der Mittelpunkt der jeweiligen Aushebe- bzw. Haltevorrichtung (in der Ebene parallel zur Lagerungsebene) positioniert. Es ist aber grundsätzlich möglich, einen anderen Punkt der jeweiligen Aushebe- bzw. Haltevorrichtung an der Aushebe- bzw. Halteposition zu positionieren. Dies kann beispielsweise der Fall sein, wenn z.B. zwei der Aushebe- bzw. Haltevorrichtungen in einer Bewegungsrichtung (z.B. X-Richtung oder Y-Richtung) parallel zur Lagerungsebene bewegungsgekoppelt sind (s.u.).

An einer jeweiligen Aushebe- bzw. Haltevorrichtung können die zugehörigen Aushebe- bzw. Halteelemente beispielsweise in einer rasterförmigen Anordnung in einer Ebene parallel zur Lagerungsebene angeordnet sein. Bei der Entnahme des Werkstückteils ist nur der Anteil der Aushebe- bzw. Halteelemente aktiv und kann zur Entnahme des Werkstückteils beitragen, der sich bei der in der jeweiligen Aushebe- bzw. Halteposition positionierten Aushebe- bzw. Haltevorrichtungen innerhalb des zu entnehmenden Werkstückteils befindet.

Eine jeweilige Aushebe- bzw. Haltevorrichtung, genauer gesagt eine werkstückseitige Stirnfläche der Aushebe- bzw. Haltevorrichtung mit den Aushebe- bzw. Halteelementen kann insbesondere eine rechteckige Geometrie aufweisen, wobei die Längs- und Querrichtung der Aushebe- bzw. Haltevorrichtung in der Regel mit der Längs- und Querrichtung der rechteckigen Umschließungskontur übereinstimmen. Grundsätzlich sind aber auch andere Geometrien der Aushebe- bzw. Haltevorrichtungen möglich. Die Geometrie der Umschließungskontur ist typischerweise an die Geometrie der Aushebe- bzw. Haltevorrichtungen angepasst.

Bei dem erfindungsgemäßen Verfahren werden innerhalb der Umschließungskontur sich ggf. gegenseitig überlappende Wirkbereiche festgelegt, die einer jeweiligen Aushebevorrichtung bzw. Haltevorrichtung zugeordnet sind. Für jeden einer jeweiligen Aushebe- bzw. Haltevorrichtung zugeordneten Wirkbereich wird der innerhalb des Wirkbereichs liegende Flächenbereich bzw. Anteil des plattenförmigen Werkstückteils ermittelt. Die Aushebe- bzw. Halteposition relativ zum Werkstückteil wird abhängig von der Geometrie bzw. der Position des Flächenbereichs des Werkstückteils innerhalb des zugehörigen Wirkbereichs derart festgelegt, dass die aktiven Aushebeelemente bzw. die aktiven Halteelemente der dem Wirkbereich zugeordneten Aushebe- bzw. Haltevorrichtung bei der Entnahme des Werkstückteils die Gefahr eines Verkantens und/oder Verhakens im Restwerkstück möglichst minimieren.

Bei einer Variante werden in Schritt a) die Aushebepositionen und/oder die Haltepositionen initial gleichmäßig relativ zur Umschließungskontur festgelegt. Da die Wirkbereiche und die in den Wirkbereichen positionierten Flächenbereiche des zu entnehmenden Werkstückteils von der jeweiligen Aushebe- bzw. Halteposition abhängig sind, ist es erforderlich, die Aushebe- bzw. Haltepositionen zu Beginn des Verfahrens (initial) festzulegen. Die initiale Festlegung der Positionen erfolgt bevorzugt so, dass zu diesem Zweck nur die Umschließungskontur des Werkstücks berücksichtigt wird. Die initiale Festlegung der Aushebe- und/oder Haltepositionen erfolgt bevorzugt gleichmäßig, d.h. die Aushebe- bzw. Haltevorrichtungen weisen gleiche Abstände zueinander und zu den Kanten der Umschließungskontur auf. Falls dies aufgrund von Kollisionen zwischen den Aushebe- bzw. Haltevorrichtungen nicht möglich ist, werden die Aushebe- bzw. Haltevorrichtungen unter Berücksichtigung ihrer Mindestabstände mit gleichen Abständen zu den Kanten der Umschließungskontur platziert.

Bei einer weiteren Variante erfolgt das Festlegen der Aushebeposition und/oder der Halteposition unter Berücksichtigung des jeweiligen Wirkbereichs anhand von geometrischen Kriterien, d.h. anhand von mindestens einer geometrischen Eigenschaft des in dem jeweiligen Wirkbereich befindlichen Teilbereichs des Werkstückteils. Die geometrische Eigenschaft stellt bevorzugt ein Flächenschwerpunkt des Teilbereichs des Werkstückteils dar, der in einem jeweiligen Wirkbereich angeordnet ist. Insbesondere kann die Aushebe- bzw. Halteposition mit dem Flächenschwerpunkt des in dem Wirkbereich befindlichen Teilbereichs des Werkstückteils übereinstimmend festgelegt werden. Die Aushebe- bzw. Haltevorrichtung wird in diesem Fall bevorzugt mit ihrem Flächenschwerpunkt bzw. mit ihrem Mittelpunkt am Flächenschwerpunkt des Teilbereichs positioniert, um das Werkstückteil zu entnehmen (s.o.). Sofern in dem Wirkbereich kein Teilbereich des Werkstückteils enthalten ist, wird die initiale Positionierung beibehalten.

Sind zwei oder mehr Aushebe- bzw. Haltevorrichtungen bei ihrer Bewegung in einer Bewegungsrichtung (z.B. X-Richtung oder Y-Richtung) parallel zur Lagerungsebene bewegungsgekoppelt, beispielsweise weil diese verfahrbar an einer gemeinsamen Tragstruktur, beispielsweise an einem Tragbalken oder an einer Schiene, angebracht sind, kann der (gemeinsame) Mittelpunkt der Aushebe- bzw. Haltevorrichtungen in dieser Bewegungsrichtung, der beispielsweise der Koordinate der Tragstruktur entspricht, an einer Position angeordnet werden, die dem Mittelwert der Aushebe- bzw. Haltepositionen der zwei oder mehr Aushebe- bzw. Haltevorrichtungen entspricht, die gemeinsam an der Tragstruktur angebracht sind.

Bei einer weiteren Variante wird nach Schritt d) nacheinander für jede Aushebevorrichtung und/oder für jede Haltevorrichtung folgender Schritt durchgeführt: e) Bestimmen eines Abstands der Aushebevorrichtung zu benachbarte(n) Aushebevorrichtung(en) und/oder der Haltevorrichtung zu benachbart(en) Haltevorrichtung(en) und/oder Tragstruktur(en), sowie für den Fall, dass der Abstand unter einem Mindestabstand liegt, Verändern der festgelegten Aushebeposition der Aushebevorrichtung und/oder der festgelegten Aushebeposition(en) der benachbarten Aushebevorrichtung(en) und/oder Verändern der festgelegten Halteposition der Haltevorrichtung und/oder der festgelegten Halteposition(en) der benachbarten Haltevorrichtung(en), bis der Mindestabstand erreicht ist.

Sofern bei den festgelegten Aushebepositionen der Aushebevorrichtungen und/oder bei den festgelegten Haltepositionen der Haltevorrichtungen Kollisionen zwischen benachbarten Aushebe- bzw. Haltevorrichtungen entstehen, müssen diese durch geeignetes Verschieben der Aushebe- bzw. Haltevorrichtungen (entsprechend einer Veränderung der bereits festgelegten Aushebe- bzw. Haltepositionen) aufgelöst werden. Gleiches gilt für die Kollision der Aushebe- bzw. Haltevorrichtungen mit ggf. vorhandenen Tragstrukturen, beispielsweise in Form von Tragbalken oder von Schienen, an denen zwei oder mehr Aushebe- bzw. Haltevorrichtungen verfahrbar gelagert sind (s.o.).

Bei einer Aushebevorrichtung oder einer Haltevorrichtung mit Kollisionen zur linken und zur rechten Seite werden die benachbarten Aushebe- oder Haltevorrichtungen bzw. benachbarte Tragstrukturen von Aushebe- oder Haltevorrichtungen soweit von der mittleren Vorrichtung weg verschoben, bis festgelegte Mindestabstände links und rechts eingehalten werden. Bei zwei miteinander kollidierenden Vorrichtungen werden beide in entgegengesetzte Richtungen verschoben, bis der Mindestabstand zwischen den Vorrichtungen eingehalten wird. Das Verschieben kann dabei Folgekollisionen verursachen, die iterativ in Richtung der Verschiebung weiter aufgelöst werden: Wird eine Vorrichtung zur Kollisionsauflösung nach rechts geschoben, so schiebt diese Vorrichtung alle weiteren Vorrichtungen bzw. Tragstrukturen, mit denen sie kollidieren würde, vor sich her ebenfalls nach rechts. Sofern die Bewegung bei der Kollisionsauflösung an einen Anschlag der Verfahrbarkeit bzw. des Bewegungsbereichs der Aushebe- bzw. Haltevorrichtungen stößt, muss die Auflösungsrichtung umgekehrt werden. Die Auflösung der Kollisionen wird nacheinander für jede der Aushebe- bzw. der Haltevorrichtungen durchgeführt.

In einer Weiterbildung erfolgt das Festlegen und/oder das Verändern der Aushebepositionen der Aushebevorrichtungen in diskreten Schritten, um Durchtrittsöffnungen einer Werkstückauflage zum Durchtritt von Aushebeelementen der Aushebevorrichtungen zu berücksichtigen. Mit anderen Worten wird bei der Positionierung ein Positionierungsraster für die Aushebeelemente der Aushebevorrichtungen berücksichtigt, das durch entsprechende Durchtrittsöffnungen (z.B. Schlitze oder Bohrungen) in der Werkstückauflage des Werkstücks bedingt ist, durch die die Aushebeelemente der Aushebevorrichtungen zum Ausheben des Werkstückteils hindurchbewegt werden müssen. Die Positionierung erfolgt also nicht kontinuierlich, sondern in diskreten Schritten, die dem Raster der Durchtrittsöffnungen entsprechen.

Bei einer Weiterbildung werden die Schritte c), d) und e) wiederholt, bis ein Abbruchkriterium erreicht ist. Nach dem Auflösen der Kollisionen in Schritt e) werden erneut die Wirkbereiche der Aushebe- bzw. Haltevorrichtungen an den (veränderten) Aushebe- bzw. Haltepositionen festgelegt und anhand der in den Wirkbereichen positionierten Flächenbereichen des Werkstückteils neue Aushebe- bzw. Haltepositionen festgelegt, für die nachfolgend das Auflösen von Kollisionen erfolgt. Die Iteration der Schritte c), d) und e) wird so lange durchgeführt, bis ein Abbruchkriterium erreicht wird, bei dem es sich im einfachsten Fall um eine fest vorgegebene Anzahl von Wiederholungen bzw. von Iterationen handeln kann.

Bei einer Weiterbildung bildet ein Maß für die Veränderung der festgelegten Aushebepositionen und/oder der festgelegten Haltepositionen in Schritt d) und/oder in Schritt e) das Abbruchkriterium. Bei dem Maß kann es sich beispielsweise um die maximale Veränderung unter jeweils allen Aushebe- bzw. Haltepositionen vor und nach dem Auflösen der Kollisionen handeln. Liegt das Maß für die maximale Veränderung der Aushebe- bzw. der Haltepositionen in den Schritten d) und/oder e) unter einem festgelegten Schwellwert, bei dem sich keine signifikanten Veränderungen der festgelegten Positionen mehr ergeben, sind keine weiteren Iterationsschritte bzw. Wiederholungen mehr erforderlich und das Verfahren kann beendet werden.

Bei einer weiteren Weiterbildung werden nach einer vorgegebenen Anzahl von Wiederholungen die festgelegten Aushebepositionen und/oder die festgelegten Haltepositionen mit einem Bewertungskriterium bewertet, wobei bevorzugt die Bewertung der festgelegten Aushebepositionen und/oder der festgelegten Haltepositionen durch das Bewertungskriterium als Abbruchkriterium verwendet wird. Das Bewertungskriterium berücksichtigt bei der Bewertung insbesondere die Anzahl der bei der Entnahme des Werkstückteils aktiven Aushebeelemente der Aushebevorrichtung und/oder der aktiven Halteelemente der Haltevorrichtung. Entspricht das Bewertungskriterium bei den festgelegten Aushebe- und/oder Haltepositionen dem Abbruchkriterium, welches typischerweise einen Grenz- bzw. Schwellwert des Bewertungskriteriums bildet, sind keine weiteren Iterationsschritte mehr notwendig.

In Abhängigkeit von der Komplexität der Geometrie des zu entnehmenden Werkstückteils, dem gewünschten Optimierungsgrad und dem erforderlichen Rechenaufwand kann ein einfaches oder eine komplexeres Bewertungskriterium gewählt werden. Die (primäre) geometrische Festlegung der Aushebe- und/oder Haltepositionen gewährleistet eine schnelle Berechenbarkeit geeigneter Aushebe- und/oder Haltepositionen. Die Bewertung der festgelegten Aushebe- und/oder Haltepositionen mittels des Bewertungskriteriums kann nach jedem Iterationsschritt oder - vorzugsweise - erst nach einer vorgegebenen Anzahl von Iterationen oder erst dann durchgeführt werden, wenn sich bei den Iterationen die Aushebe- und/oder Haltepositionen nicht mehr signifikant verändern, d.h. wenn das weiter oben beschriebene Abbruchkriterium bezüglich der Veränderung der Aushebe- bzw. Haltepositionen nach Schritt e) erfüllt ist. Auch in dem Fall, dass das Bewertungskriterium nicht als Abbruchkriterium verwendet wird, kann die Bewertung durch (mindestens ein) Bewertungskriterium sinnvoll sein. Beispielsweise kann das Bewertungskriterium dazu verwendet werden, die Prozesssicherheit der Entnahme des Werkstückteils zu beurteilen. Dies kann dann zur Entscheidung herangezogen werden, ob die ermittelte Position für eine Entnahme des Werkstückteils geeignet ist.

Bei einer weiteren Variante ist das Bewertungskriterium für die Aushebepositionen ausgewählt oder auswählbar aus der Gruppe umfassend: Zahl der aktiven Aushebeelemente der Aushebevorrichtungen, Fläche der konvexen Hülle, die von den aktiven Aushebeelementen aufgespannt wird, Verhältnis der Druckkraft der aktiven Aushebeelemente zur Gewichtskraft des Werkstückteils, Durchbiegung des Werkstückteils bei der Auflage auf den Auflagevorrichtungen, Maximum aller Abstände beliebiger Punkte des Werkstückteils zum nächstgelegenen aktiven Aushebeelement, d.h. maximale Entfernung eines beliebigen Werkstückteilpunktes vom nächstgelegenen stützenden Aushebeelement. Durch Minimierung des letztgenannten Wertes wird sichergestellt, dass alle Bereiche des Werkstückteils möglichst gut gestützt sind, also beispielsweise keine einseitige Stützung vorliegt.

Wie weiter oben beschrieben wurde, kann das Bewertungskriterium einfache oder vergleichsweise komplexe Berechnungen erfordern, die als Abbruchkriterium herangezogen werden können. Ein einfaches Bewertungskriterium stellt die Anzahl der für die Entnahme des Werkstückteils aus dem Restwerkstück nutzbaren (aktiven) Aushebeelemente, z.B. in Form von Aushebestiften, dar. Soll das Bewertungskriterium als Abbruchkriterium dienen, wird das Bewertungskriterium mit einem Schwellwert für die Anzahl von aktiven Aushebeelementen verglichen, der für den Abbruch des Verfahrens überschritten werden muss. Auch die von den aktiven Aushebeelementen aufgespannte konvexe Hülle kann als Bewertungskriterium dienen. Die konvexe Hülle, die von den Aushebeelementen aufgespannt wird, ist hierbei wie allgemein in der Mathematik üblich definiert.

Alternativ kann als Bewertungskriterium das Verhältnis der durch die aktiven Aushebeelemente aufbringbaren Druckkraft zur Gewichtskraft des Werkstückteils dienen, das einen festgelegten Schwellwert überschreiten muss, damit das Verfahren abgebrochen wird. Die von einem jeweiligen Aushebeelement auf das Werkstückteil aufbringbare Druckkraft ist ebenso im Voraus bekannt wie die Gewichtskraft des Werkstückteils, die sich aus der Dichte und dem Volumen des Werkstückteils (Fläche des Werkstückteils multipliziert mit der Dicke des Werkstückteils) ergibt. Alternativ kann als Bewertungskriterium herangezogen werden, dass das Maximum aller Abstände beliebiger Punkte des Werkstückteils zum nächstgelegenen aktiven Aushebeelement möglichst klein wird bzw. einen Grenzwert unterschreitet, um sicherzustellen, dass der Abstand eines beliebigen Werkstückpunkts vom nächstgelegenen stützenden Aushebeelement nicht zu groß wird, um eine daraus resultierende Durchbiegung des Werkstückteils zu vermeiden.

Alternativ kann als Bewertungskriterium in einem Bewertungsmodul mit Hilfe von Finite-Element-Methoden die Durchbiegung des Werkstückteils bei den festgelegten Aushebepositionen der Aushebevorrichtungen berechnet und für die Verwendung des Bewertungskriteriums als Abbruchkriterium mit einem Schwellwert verglichen werden. Zudem können mit solchen Finite-Element-Berechnungen Verhakungen des Werkstückteils im Restwerkstück erkannt werden. Die einzelnen Bewertungskriterien oder -module/Bewertungsfunktionen können abhängig von einem gewünschten Optimierungsgrad, Berechnungsaufwand oder von der Komplexität der zu entnehmenden Werkstückteile von einem Bediener oder durch das Programmiersystem der Maschine auswählbar sein oder es kann mindestens eines der Bewertungskriterien fest vorgegeben sein.

Bei einer weiteren Variante ist das Bewertungskriterium für die Haltepositionen ausgewählt oder auswählbar aus der Gruppe umfassend: Anzahl der aktiven Halteelemente der Haltevorrichtungen, Fläche der konvexen Hülle, die von den aktiven Halteelementen aufgespannt wird, Verhältnis der Haltekraft der aktiven Halteelemente zur Gewichtskraft des Werkstückteils, Maximum aller Abstände beliebiger Punkte des Werkstückteils zum jeweils nächstliegenden aktiven Halteelement, Durchbiegung des Werkstückteils bei der Halterung an den aktiven Halteelementen. Für die Bewertungskriterien der Haltepositionen gilt das weiter oben zu den Bewertungskriterien für die Aushebepositionen Gesagte entsprechend.

Bei einer weiteren Variante wird in Schritt c) ein Wirkbereich einer jeweiligen Aushebevorrichtung festgelegt, der durch die Umschließungskontur und mindestens eine benachbarte Aushebevorrichtung begrenzt wird und/oder es wird ein Wirkbereich einer jeweiligen Haltevorrichtung festgelegt, der durch die Umschließungskontur und mindestens eine benachbarte Haltevorrichtung begrenzt wird. Bei der Festlegung des Wirkbereichs wird kein Mindestabstand zu den geometrisch benachbarten Aushebe- bzw. Haltevorrichtungen berücksichtigt, d.h. der Wirkbereich erstreckt sich bis zu einer jeweiligen Außenkante der benachbarten Aushebe- bzw. Haltevorrichtung(en). Mit Hilfe der auf die oben beschriebene Weise festgelegten Wirkbereiche kann eine globale Positionierung der Aushebe- bzw. Haltevorrichtungen erfolgen, d.h. es handelt sich um globale Wirkbereiche unter Berücksichtigung benachbarter Aushebe- bzw. Haltevorrichtungen.

Bei einer Weiterbildung dieser Variante wird nach dem Erreichen des Abbruchkriteriums ein in der Regel kleinerer, lokaler Wirkbereich für jede der Aushebevorrichtungen und/oder für jede der Haltevorrichtungen festgelegt und die Schritte c), d) und e) werden ein- oder mehrmals erneut durchgeführt, bis ein Abbruchkriterium erreicht ist. Mit Hilfe der lokalen Wirkbereiche können die Aushebe- und/oder Haltepositionen lokal optimiert werden. Um die Lokalität der Positionierung zu gewährleisten, werden die lokalen Wirkbereiche in der Regel kleiner als die (globalen) Wirkbereiche gewählt. Ein lokaler Wirkbereich einer Aushebe- bzw. Haltevorrichtung kann in Einzelfällen größer sein als ein bei der globalen Positionierung festgelegter Wirkbereich, beispielsweise wenn bei der globalen Positionierung die Aushebe- bzw. Haltevorrichtung zwischen benachbarten Aushebe- bzw. Haltevorrichtungen "eingesperrt" war. Die iterative Positionierung, Kollisionsbetrachtung und Positionsbewertung der Aushebe- und/oder Haltepositionen erfolgt analog zur weiter oben beschriebenen globalen Positionierung. Der lokale Wirkbereich kann derart festgelegt werden, dass dieser die Abmessungen, d.h. die Länge bzw. die Breite der Aushebe- oder der Haltevorrichtung jeweils um einen vorgegebenen Prozentsatz oder einen fest vorgegebenen absoluten Wert übersteigt.

Bevorzugt weist der lokale Wirkbereich Abmessungen auf, welche die Abmessungen der Aushebevorrichtung und/oder der Haltevorrichtung um mindestens 10 % und um nicht um mehr als 50 % übersteigt. Wie weiter oben beschrieben wurde, kann der lokale Wirkbereich ohne einen Bezug zu den benachbarten Aushebe- und/oder Haltevorrichtungen festgelegt werden, wobei der Prozentsatz, um den der lokale Wirkbereich die Abmessungen der Aushebe- bzw. Haltevorrichtung übersteigt, bevorzugt in dem angegebenen Wertebereich liegt.

Bei einer weiteren Variante sind mindestens zwei der Aushebevorrichtungen und/oder mindestens zwei der Haltevorrichtungen bei der Bewegung parallel zur Lagerungsebene in einer Bewegungsrichtung durch eine gemeinsame Tragstruktur bewegungs- bzw. zwangsgekoppelt. Wie weiter oben beschrieben wurde, können zwei oder mehr der Aushebevorrichtungen und/oder der Haltevorrichtungen an einer gemeinsamen Tragstruktur, beispielsweise in Form eines Balkens oder eines Trägers, angebracht sein. Die zwei oder mehr Aushebe- bzw. Haltevorrichtungen sind auf der Tragstruktur in einer ersten Bewegungsrichtung unabhängig voneinander verschiebbar. In einer zweiten Bewegungsrichtung werden die zwei oder mehr Aushebe- bzw. Haltevorrichtungen gemeinsam bewegt, indem die Tragstruktur verschoben wird, d.h. die zwei oder mehr Aushebe- bzw. Haltevorrichtungen sind in der zweiten Bewegungsrichtung bewegungsgekoppelt und weisen in dieser Bewegungsrichtung stets dieselbe Koordinate auf. Bei der Positionierung müssen daher die gemeinsamen Verfahrwege der bewegungsgekoppelten Aushebe- bzw. Haltevorrichtungen sowie deren potenzielle Kollisionsbereiche berücksichtigt werden, was auf die weiter oben beschriebene Weise erfolgen kann.

Bei einer weiteren Variante wird in einem Schritt b) vorausgehenden Schritt die Anzahl der zur Entnahme des Werkstückteils erforderlichen Aushebevorrichtungen und/oder Haltevorrichtungen bestimmt. Nach dem Bestimmen der Umschließungskontur in Schritt a) oder ggf. bereits vor Schritt a) muss entschieden werden, wie viele Aushebe- bzw. Haltevorrichtungen zum Entnehmen des Werkstückteils benötigt werden. Die Anzahl der Aushebe- bzw. der Haltevorrichtungen kann so bestimmt werden, dass der Prozentsatz der Überdeckung der Umschließungskontur mit den Aushebe- bzw. Haltevorrichtungen einen festgelegten Wert überschreitet. Es werden also so viele Aushebe- bzw. Haltevorrichtungen eingesetzt, wie zur Überdeckung des Werkstückteils erforderlich sind, oder - bei großen Werkstückteilen - so viele Aushebe- bzw. Haltevorrichtungen, wie verfügbar sind.

Nach dem (endgültigen) Festlegen der Aushebe- bzw. der Haltepositionen können die Aushebe- bzw. die Haltevorrichtungen parallel zur Lagerungsebene an die jeweils festgelegten Aushebe- bzw. Haltepositionen bewegt werden, um das Werkstückteil aus dem Restwerkstück zu entnehmen. Die Entnahme des Werkstückteils aus dem Restwerkstück erfolgt typischerweise in einer Entnahmerichtung senkrecht zur Lagerungsebene.

Bei einer weiteren Variante wird das Werkstückteil zumindest während eines Teils der Entnahme aus dem Restwerkstück zwischen den mindestens zwei an den Aushebepositionen angeordneten Aushebevorrichtungen und den mindestens zwei an den Haltepositionen angeordneten Haltevorrichtungen aufgenommen. Die Aushebevorrichtungen greifen an der den Haltevorrichtungen entgegen gesetzten Seite an dem Werkstückteil an und dienen zur Abstützung bzw. zur Unterstützung des Werkstückteils. Die Haltevorrichtungen dienen als Gegenhalter und ermöglichen es, das Werkstückteil bei der Bewegung in einer Entnahmerichtung, die senkrecht zur Lagerungsebene verläuft, zwischen der Aushebevorrichtung und der Haltevorrichtung parallel zur Lagerungsebene zu lagern, so dass das Werkstückteil bei der Entnahme nicht am Restwerkstück verhakt oder verkantet und seine Lage in X- und Y-Richtung nicht verändert. Die Aushebeelemente können beispielsweise in Form von Aushebestiften ausgebildet sein, die unabhängig voneinander gesteuert betätigbar sind. Die Halteelemente können beispielsweise als unabhängig voneinander gesteuert betätigbare Sauggreifer ausgebildet sein.

Die Erfindung betrifft auch ein Computerprogrammprodukt, welches zur Durchführung aller Schritte des oben beschriebenen Verfahrens ausgebildet ist, wenn das Computerprogramm auf einer Datenverarbeitungsanlage abläuft (siehe Anspruch 18). Bei der Datenverarbeitungsanlage kann es sich insbesondere um eine Steuerungseinrichtung der Vorrichtung handeln, auf der ein Bearbeitungsprogramm abläuft, welches im Wesentlichen in einer Abfolge von (Steuerungs-)befehlen zum Festlegen der Aushebe- bzw. Haltepositionen sowie zum Koordinieren der Bewegungen der Aushebe- bzw. der Haltevorrichtungen und der zugehörigen Aushebe- bzw. Halteelemente besteht.

Die Erfindung betrifft auch eine Vorrichtung zum Entnehmen eines Werkstückteils aus einem Restwerkstück, umfassend: eine Aushebeeinheit mit mindestens zwei Aushebevorrichtungen, die jeweils eine Mehrzahl von Aushebeelementen aufweisen, sowie eine Gegenhalteeinheit mit mindestens zwei Haltevorrichtungen, die jeweils eine Mehrzahl von Halteelementen aufweisen, eine Aushebevorrichtungs-Bewegungseinrichtung zur Bewegung der Aushebevorrichtungen parallel zu einer Lagerungsebene des Restwerkstücks, eine Haltevorrichtungs-Bewegungseinrichtung zur Bewegung der Haltevorrichtungen parallel zu der Lagerungsebene des Restwerkstücks, sowie eine Steuerungseinheit zur Steuerung der Aushebevorrichtungs-Bewegungseinrichtung zur Bewegung der Aushebevorrichtungen an festgelegte Aushebepositionen und zur Steuerung der Haltevorrichtungs-Bewegungseinrichtung zur Bewegung der Haltevorrichtungen an festgelegte Haltepositionen, wobei die Steuerungseinheit ausgebildet bzw. programmiert ist, die Aushebepositionen und/oder die Haltepositionen gemäß dem weiter oben beschriebenen Verfahren festzulegen (siehe Anspruch 19).

Die Haltevorrichtungs-Bewegungseinrichtung und/oder die Aushebevorrichtungs-Bewegungseinrichtung können ausgebildet sein, die Haltevorrichtungen und/oder die Aushebevorrichtungen in einer Entnahmerichtung senkrecht zur Lagerungsebene zu bewegen. Insbesondere können die Haltevorrichtungs-Bewegungseinrichtung und/oder die Aushebevorrichtungs-Bewegungseinrichtung ausgebildet sein, die Halteelemente und/oder die Aushebeelemente unabhängig voneinander zu betätigen, d.h. senkrecht zur Lagerungsebene zu verschieben.

Ein weiterer Aspekt der Erfindung betrifft eine Bearbeitungsmaschine zum trennenden Bearbeiten von plattenartigen Werkstücken, insbesondere von Blechen, mittels eines Bearbeitungswerkzeugs, beispielsweise einer Laser-Schneideinrichtung oder eines Stanzwerkzeugs, weiter umfassend: eine Vorrichtung zur Entnahme eines beim trennenden Bearbeiten von einem Restwerkstück getrennten Werkstückteils, wie sie weiter oben beschrieben ist. Eine Werkstückauflage, die eine Lagerungsebene zur Auflage des Werkstücks beim trennenden Bearbeiten bildet, kann auch eine Werkstückauflage der Vorrichtung zur Entnahme von Werkstückteilen aus dem Restwerkstück bilden (siehe Anspruch 20).

In der Bearbeitungsmaschine kann eine Werkstücktransfervorrichtung angeordnet sein, mittels derer das Restwerkstück gemeinsam mit dem freigetrennten Werkstückteil von einer Bearbeitungsposition der Bearbeitungsmaschine zum trennenden Bearbeiten des Werkstücks an eine Entladeposition der Vorrichtung zum Entnehmen des Werkstückteils bewegt werden kann.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung eines Beispiels einer Bearbeitungsmaschine zum trennenden Bearbeiten eines Werkstücks mittels eines Laserstrahls,
- Fig. 2: eine Darstellung einer Vorrichtung zur Entnahme eines Werkstückteils aus einem Restwerkstück an der Bearbeitungsmaschine von Fig. 1,
- Fig. 3a-d: Darstellungen mehreren Schritten zur Festlegung von Aushebepositionen von vier Aushebevorrichtungen einer Aushebeeinheit der Vorrichtung von Fig. 2, sowie
- Fig. 4: eine Darstellung von sechs Haltevorrichtungen einer Gegenhalteeinheit, deren Haltepositionen zur optimalen Positionierung von zwei Niederhaltern relativ zum zu entnehmenden Werkstückteil verändert werden.

In der folgenden Beschreibung der Zeichnungen werden für gleiche bzw. funktionsgleiche Bauteile identische Bezugszeichen verwendet.

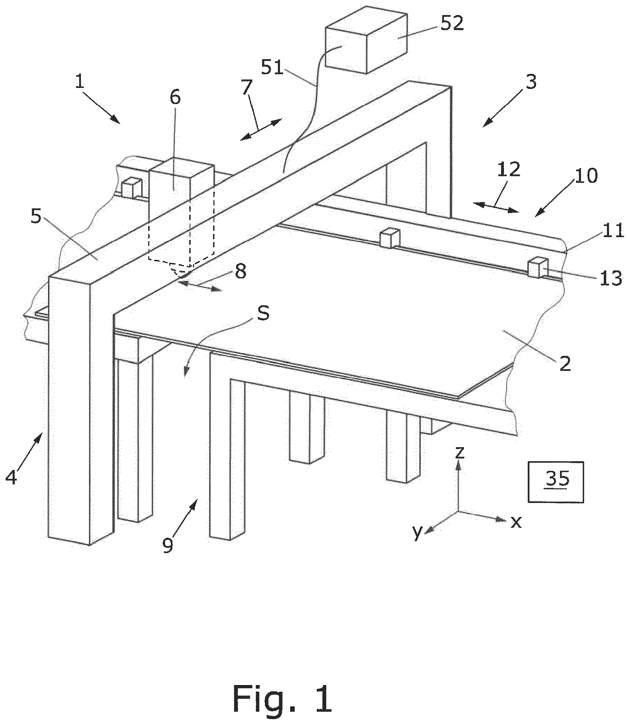

**Fig. 1** zeigt eine Bearbeitungsmaschine 1 zum trennenden Bearbeiten eines Werkstücks 2 in Form eines Blechs, welche als Bearbeitungswerkzeug eine Laser-Schneideinrichtung 3 aufweist. Die Laser-Schneideinrichtung 3 weist eine portalartige Führungsstruktur 4 mit einem Portal-Querträger 5 sowie einen an dem Portal-Querträger 5 geführten Laserschneidkopf 6 auf. In senkrecht zueinander verlaufenden Richtungen ist der Laserschneidkopf 6 relativ zu dem Portal-Querträger 5 in Richtung von Doppelpfeilen 7, 8 beweglich. Über ein Lichtleitkabel 51 ist der Laserschneidkopf 6 mit einer Laserstrahlquelle in Form eines Festkörperlasers 52 verbunden.

Die portalartige Führungsstruktur 4 übergreift einen zweiteiligen Werkstücktisch 9, auf welchem ein Blech 2 vor, während und nach der schneidenden Bearbeitung gelagert ist. Mittels des Laserschneidkopfs 6 der Bearbeitungsmaschine 1 wird das Blech 2 trennend bearbeitet. Dabei ist das Blech 2 auf dem Werkstücktisch 9 gelagert. Während der Bearbeitung gebildete Schlacke sowie Staub und Rauch werden durch einen zwischen den beiden Teilen des Werkstücktisches 9 gebildeten Spalt S und eine unterhalb des Spalts S angeordnete, mit einem Gebläse verbundene Abführeinrichtung (z.B. einen Absaugkasten, nicht gezeigt) abgesaugt. Nach der Bearbeitung werden Werkstückteile, die mittels des Laserschneidkopfs 6 freigeschnitten worden sind, von einem bei der Bearbeitung gleichfalls erzeugten Restwerkstück (Restgitter) getrennt und anschließend aus dem Nahbereich der Bearbeitungsmaschine 1 abgeführt.

Zur Bewegung des Blechs 2 vor, während und nach seiner Bearbeitung dient eine in Fig. 1 stark schematisiert dargestellte Werkstück-Bewegungseinheit 10. Die Blech-Bewegungseinheit 10 umfasst eine Schiene 11, die durch eine nicht gezeigte Führungseinrichtung in Richtung eines Doppelpfeils 12 beweglich geführt ist und an der ein Blech 2 mittels Spannpratzen 13 fixiert werden kann.

Mittels der Werkstück-Bewegungseinheit 10 wird das Blech 2 zur Bearbeitung im Arbeitsbereich des Laserschneidkopfs 6 positioniert. Während der Bearbeitung kann das Blech 2 durch die Werkstück-Bewegungseinheit 10 in Richtung des Doppelpfeils 12 bewegt werden. Damit überlagerte Bearbeitungsbewegungen werden von dem Laserschneidkopf 6 in Richtung des Doppelpfeils 7 ausgeführt. Außerdem verfügt der Laserschneidkopf 6 über eine Zusatzachse, die kurze hochdynamische Bewegungen des Laserschneidkopfs 6 in Richtung des Doppelpfeils 8 und somit in der Bewegungsrichtung der Werkstück-Bewegungseinheit 10 ermöglicht. Mit einem abschließenden Trennschnitt schneidet der Laserschneidkopf 6 ein (in Fig. 1 nicht gezeigtes) Werkstückteil von dem (in Fig. 1 nicht gezeigten) Restgitter frei. Dabei befinden sich das Werkstückteil und das Restgitter an der Bearbeitungsmaschine 1 jeweils in einer Bearbeitungsposition. Nach Beendigung der Bearbeitung transferiert die Werkstück-Bewegungseinheit 10 das nunmehr freigeschnittene Werkstückteil und das Restgitter gemeinsam aus der jeweiligen Bearbeitungsposition in eine Entladeposition.

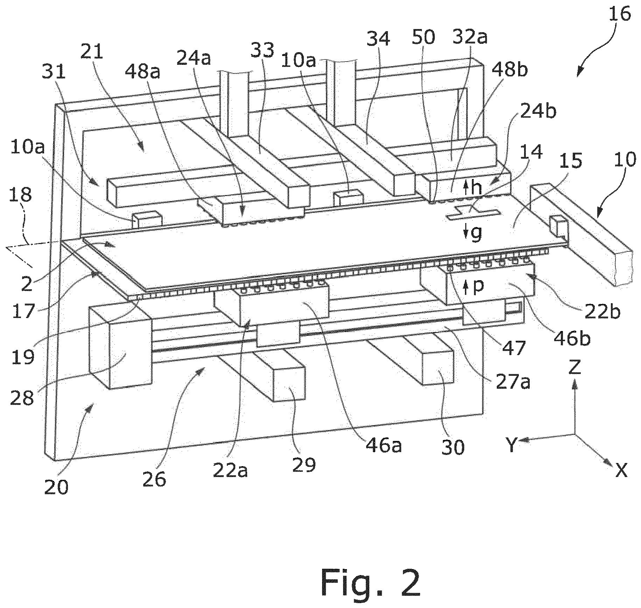

Sind das freigeschnittene Werkstückteil 14 und das Restwerkstück 15 in ihre Entladepositionen transferiert, ergeben sich die in Fig. 2 dargestellten Verhältnisse, die eine Vorrichtung 16 zur Entnahme des Werkstückteils 14 aus dem Restwerkstück 15 zeigt. Der Übersichtlichkeit halber zeigt Fig. 2 an dem bearbeiteten Blech 2 lediglich ein einzelnes Werkstückteil 14, das von dem Restwerkstück 15 (Restgitter) umschlossen wird. Mittels der Vorrichtung 16 wird das Werkstückteil 14 aus dem Restwerkstück 15 entnommen, bevor das Werkstückteil 14 aus dem Nahbereich der Bearbeitungsmaschine 1 abtransportiert werden kann. Das Restwerkstück 15 verbleibt hierbei auf dem Werkstücktisch 9 (vgl. Fig. 1), ehe es nach der Entnahme sämtlicher Werkstückteile ebenfalls aus dem Nahbereich der Bearbeitungsmaschine 1 abgeführt wird.

Als Werkstücklagerung für das Restwerkstück 15 und das Werkstückteil 14 dient eine plattenartige Werkstückauflage 17 des Werkstücktischs 9. In bekannter Weise ist die Werkstückauflage 17 an ihrer Oberseite mit in Fig. 2 nicht erkennbaren Borsten oder Rollen versehen, die eine reibungs- und kratzerarme Bewegung des bearbeiteten Blechs 2 über die stationäre Werkstückauflage 17 ermöglichen. Die Auflagestellen des bearbeiteten Blechs 2 auf den Borsten oder den Rollen der Werkstückauflage 17 definieren eine in Fig. 2 angedeutete Lagerungsebene 18 der Werkstückauflage 17. Die Lagerungsebene 18 verläuft parallel zu der Platten-Hauptebene der Werkstückauflage 17. Entlang der Lagerungsebene 18 fluchten das Werkstückteil 14 und das Restwerkstück 15 miteinander.

Wie aus Fig. 2 hervorgeht, ist die Werkstückauflage 17 der Bearbeitungsmaschine 1 in dem dargestellten Beispielsfall als Lochplatte mit einer Vielzahl von Durchtrittsöffnungen 19 ausgebildet. Alternativ kann die Werkstückauflage 17 durch mehrere Profilkörper gebildet sein, die parallel unter Ausbildung von schlitzförmigen Durchtrittsöffnungen 19 zueinander beabstandet und parallel zum Spalt S angeordnet sind und auf ihrer zum Werkstück 2 zeigenden Stirnseite ein mehrere Borstenbündel umfassendes Bürstenelement aufweisen. Unterhalb der Werkstückauflage 17 ist eine Aushebeeinheit 20, oberhalb der Werkstückauflage 17 eine Gegenhalteeinheit 21 der Vorrichtung 16 angeordnet. Die Aushebeeinheit 20 umfasst vier baugleiche Aushebevorrichtungen 22a-d, von denen in Fig. 2 eine erste und eine zweite Aushebevorrichtung 22a, 22b zu erkennen sind, die Gegenhalteeinheit 21 umfasst vier baugleiche Haltevorrichtungen 24a-d, von denen in Fig. 2 eine erste und zweite Haltevorrichtung 24a, 24b zu erkennen sind.

Die Aushebevorrichtungen 22a-d sind mittels einer Aushebevorrichtungs-Bewegungseinrichtung 26 parallel zu der Lagerungsebene 18 grundsätzlich an jede beliebige Stelle unterhalb der Werkstückauflage 17 bewegbar und dort zustellbar, wobei bei der Bewegung sichergestellt sein muss, dass die Aushebevorrichtungen 22a-d nicht miteinander kollidieren und die Aushebeelemente 47 unter den Durchtrittsöffnungen 19 platziert werden. Die erste und die zweite Aushebevorrichtung 22a, 22b sind auf einer Tragstruktur in Form einer ersten Längsschiene 27a der Aushebevorrichtungs-Bewegungseinrichtung 26 angeordnet, entlang derer die erste und zweite Aushebevorrichtung 22a, 22b motorisch angetrieben in Y-Richtung eines XYZ-Koordinatensystems verfahren können. Ein Antriebsmotor 28 der Aushebevorrichtungen 22a, 22b ist in Fig. 2 zu erkennen. Gemeinsam mit der ersten und zweiten Aushebevorrichtung 22a, 22b ist die Längsschiene 27a an zwei senkrecht zur ersten Längsschiene 27a verlaufenden Querschienen 29, 30 der Aushebevorrichtungs-Bewegungseinrichtung 26 in X-Richtung verfahrbar.

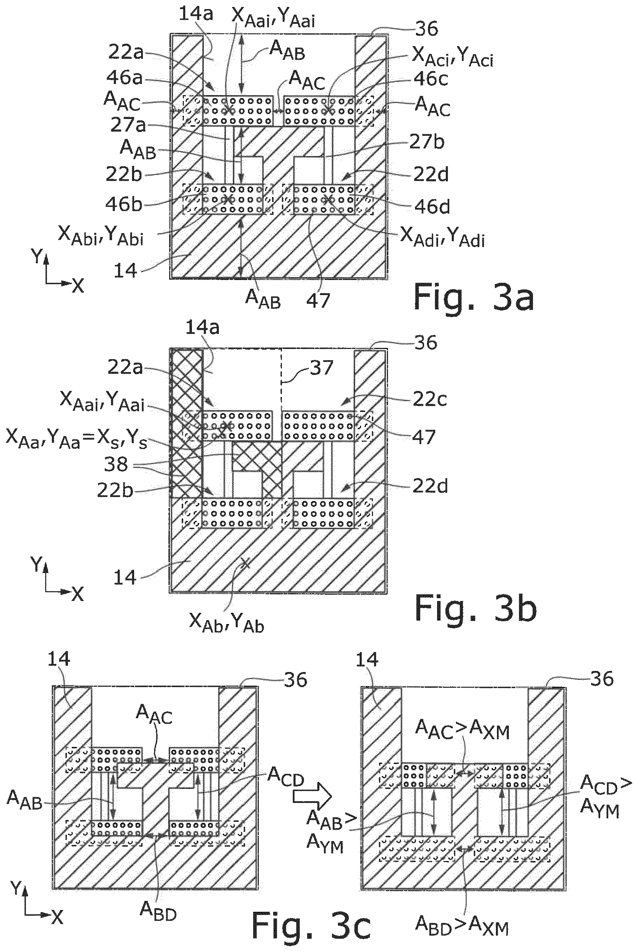

Wie in Fig. 3a-d zu erkennen ist, sind die dritte und die vierte Aushebevorrichtung 22c, 22d der Aushebevorrichtungs-Bewegungseinrichtung 26 an einer Tragstruktur in Form einer zweiten Längsschiene 27b angeordnet, entlang derer die dritte und die vierte Aushebevorrichtung 22c, 22d mittels eines nicht bildlich dargestellten weiteren Antriebsmotors motorisch angetrieben in Y-Richtung verfahren können. Die Querschienen 29, 30 können gemeinsam mit den beiden Längsschienen 27a, 27b und den von diesen geführten Aushebevorrichtungen 22a-d senkrecht zu der Werkstückauflage 17 bzw. der Lagerungsebene 18 (in Z-Richtung) angehoben und abgesenkt werden.

Auf entsprechende Art und Weise können die vier Haltevorrichtungen 24a-d der Gegenhalteeinheit 21 parallel zu der Lagerungsebene 18 jede beliebige Stelle an dem bearbeiteten Blech 2 anfahren, sofern diese nicht gegenseitig kollidieren. Eine Haltevorrichtungs-Bewegungseinrichtung 31 umfasst zu diesem Zweck eine erste Längsschiene 32a, längs derer eine erste und zweite Haltevorrichtung 24a, 24b motorisch angetrieben in Y-Richtung bewegt und zugestellt werden können. Gemeinsam mit den Haltevorrichtungen 24a, 24b ist die Längsschiene 32a motorisch angetrieben entlang zweier Querschienen 33, 34 verfahrbar, die ihrerseits senkrecht zu der ersten Längsschiene 32a verlaufen. Entsprechend sind nicht bildlich dargestellte dritte und vierte Haltevorrichtungen 24c, 24d der Haltevorrichtungs-Bewegungseinrichtung 31 an einer Tragstruktur in Form einer (nicht bildlich dargestellten) zweiten Längsschiene 32b angeordnet, entlang derer die dritte und die vierte Haltevorrichtung 24c, 24d mittels eines nicht bildlich dargestellten weiteren Antriebsmotors motorisch angetrieben in Y-Richtung verfahren können. Die Querschienen 33, 34 können gemeinsam mit den beiden Längsschienen 32a, 32b und den von diesen geführten Haltevorrichtungen 24a-d senkrecht zu der Werkstückauflage 17 bzw. der Lagerungsebene 18 (in Z-Richtung) angehoben und abgesenkt werden.

Alle wesentlichen Funktionen der Bearbeitungsmaschine 1 und somit insbesondere auch alle wesentlichen Funktionen der Vorrichtung 16 sind numerisch gesteuert. Eine zu diesem Zweck verwendete numerische Steuerungseinheit 35 ist in Fig. 1 angedeutet. Die Koordinatenachsen der numerischen Steuerung der Bearbeitungsmaschine 1 beziehungsweise der Vorrichtung 16 sind in Fig. 1 mit X, Y, Z bezeichnet.

Die in Fig. 3a-d gezeigte erste und zweite Aushebevorrichtung 22a, 22b besitzen ausweislich Fig. 2 jeweils ein Aushebegehäuse 46a, 46b, an welchem die erste und zweite Aushebevorrichtung 22a, 22b an die erste Längsschiene 27a der Aushebevorrichtungs-Bewegungseinrichtung 26 angebunden sind. Die in Fig. 2 nicht bildlich dargestellte dritte und vierte Aushebevorrichtung 22c, 22d weisen ausweislich Fig. 3a-d ebenfalls jeweils ein Aushebegehäuse 46c, 46d auf, an welchem die dritte und vierte Aushebevorrichtung 22c, 22d an der zweiten Längsschiene 27b der Aushebevorrichtungs-Bewegungseinrichtung 26 angebunden sind.

Im Innern eines jeweiligen Aushebegehäuses 46a-d ist eine Mehrzahl herkömmlicher und in den Abbildungen nicht im Einzelnen gezeigter pneumatischer Kolben-Zylinder-Einheiten untergebracht. Mit jedem der Kolben verbunden ist jeweils ein Aushebeelement in Form eines Aushebestifts 47. Die Kolben-Zylinder-Einheiten im Inneren der Aushebegehäuse 46a-d sind getrennt ansteuerbar und können unabhängig voneinander mit einer nicht im Einzelnen gezeigten Druckquelle verbunden werden. Durch Betätigen der Kolben-Zylinder-Einheiten werden die Aushebestifte 47 in vertikaler Richtung (Z-Richtung) aus dem jeweiligen Aushebegehäuse 46a-d ausgefahren oder in das Aushebegehäuse 46a-d zurückbewegt. Der Querschnitt der Aushebestifte 47 ist kleiner als der Querschnitt der Durchtrittsöffnungen 19 an der Werkstückauflage 17 (vgl. Fig. 2)

Ausweislich Fig. 3a-d sind die Aushebestifte 47 in einer Rasteranordnung an einer rechteckigen Stirnfläche der Aushebegehäuse 46a-d angeordnet. Die Aushebegehäuse 46a-d bzw. die Aushebevorrichtungen 22a-d weisen somit parallel zur Lagerungsebene 18 des Restwerkstücks 15 eine rechteckige Grundfläche auf.

Nachfolgend wird anhand von Fig. 3a-d ein Verfahren zum Festlegen von vier Aushebepositionen X_{Aa}, Y_{Aa}; X_{Ab}, Y_{Ab}; X_{Ac}, Y_{Ac}; X_{Ad}, Y_{Ad} beschrieben, an denen jeweils eine der vier Aushebevorrichtungen 24a-d, genauer gesagt deren (Flächen-)Schwerpunkte positioniert werden, um das Werkstückteil 14 aus dem Restwerkstück 15 zu entnehmen, und zwar ohne dass das Werkstückteil 14 hierbei in dem Restwerkstück 15 verkantet oder verhakt.

Das im Folgenden beispielhaft beschriebene Verfahren gliedert sich in folgende Schritte: Initiale Positionierung, (iterative) globale geometrische Positionierung, (iterative) lokale geometrische Positionierung, jeweils mit Auflösen von Kollisionen, optional Bewertung der gefundenen Aushebepositionen X_{Aa}, Y_{Aa},....

In Schritt a) des Verfahrens wird zunächst eine das zu entnehmende Werkstückteil 14 umschließende rechteckige Umschließungskontur 36 (umschließendes Rechteck) bestimmt, deren Kanten parallel zur X-Richtung bzw. zur Y-Richtung verlaufen. Nachfolgend wird die Anzahl der zur Entnahme des Werkstückteils 14 erforderlichen Aushebevorrichtungen 22a-d bestimmt. Als Kriterium für die Bestimmung der Anzahl der Aushebevorrichtungen 22a-d kann ein Prozentsatz der Überdeckung der rechteckigen Umschließungskontur 36 mit den Aushebevorrichtungen 22a-d bzw. mit den Stirnseiten der Aushebegehäuse 46a-d verwendet werden.

Die Anzahl der Aushebevorrichtungen 22a-d sollte derart gewählt werden, dass der Prozentsatz der Überdeckung mit den Aushebevorrichtungen 22a-d einen festgelegten Wert des Flächeninhalts der Umschließungskontur 36 überschreitet. Es werden also so viele der Aushebevorrichtungen 22a-d eingesetzt, wie zur Überdeckung des Werkstückteils 14 erforderlich sind, oder-wie bei dem in Fig. 3a-d gezeigten großen Werkstückteil 14 - so viele, wie verfügbar sind, d.h. alle vier Aushebevorrichtungen 22a-d.

In Schritt b) werden die vier Aushebevorrichtungen 22a-d relativ zur Umschließungskontur 36 des zu entnehmenden Werkstückteils 14 kollisionsfrei und gleichmäßig, d.h. mit möglichst gleichen Abständen A_{AB}, A_{AC} zueinander und zu den Außenkanten der rechteckigen Umschließungskontur 36 verteilt, wie dies in Fig. 3a exemplarisch dargestellt ist. Auf diese Weise werden die (initalen) Aushebepositionen X_{Aai}, Y_{Aai}; X_{Abi}, Y_{Abi}; X_{Aci}, Y_{Aci}; X_{Adi}, Y_{Adi} der vier Aushebevorrichtungen 22a-d festgelegt. Ist die Umschließungskontur 36 wie im gezeigten Beispiel größer als die Aushebevorrichtungen 22a-d, so liegen die initialen Positionen X_{Aai}, Y_{Aai}; X_{Abi}, Y_{Abi}; X_{Aci}, Y_{Aci}; X_{Adi}, Y_{Adi} der Aushebevorrichtungen 22a-d innerhalb der Umschließungskontur 36. Bei kleineren Werkstückteilen 14 können die initialen Aushebepositionen X_{Aai}, Y_{Aai}; X_{Abi}, Y_{Abi}; X_{Aci}, Y_{Aci}; X_{Adi}, Y_{Adi} der Aushebevorrichtungen 22a-d auch außerhalb der Umschließungskontur 36 liegen, so dass nur eine teilweise Überlappung zwischen dem Werkstückteil 14 und den Aushebevorrichtungen 22a-d vorliegt.

Bei der initialen Positionierung der Aushebevorrichtungen 22a-d müssen die Mindestabstände zwischen den Aushebevorrichtungen 22a-d beachtet werden, oder die Mindestabstände zwischen Aushebevorrichtungen 22a-d und Tragstrukturen, d.h. im gezeigten Beispiel den Längsschienen 27a,b, wenn die Aushebevorrichtungen 22a-d versetzt zueinander positioniert werden. Auch in diesem Fall werden die Aushebevorrichtungen so verteilt, dass die initialen Aushebepositionen X_{Aai}, Y_{Aai}; X_{Abi}, Y_{Abi}; X_{Aci}, Y_{Aci}; X_{Adi}, Y_{Adi} zur Umschließungskontur 36 gleiche Abstände aufweisen. Die initiale Positionierung der Aushebevorrichtungen 22a-d hängt somit nur von dem umschließenden Rechteck 36 des zu entnehmenden Werkstückteils 14 ab.

Im nachfolgenden Schritt c) wird für jede der vier Aushebevorrichtungen 22a-d jeweils ein rechteckiger Wirkbereich 37 bestimmt, wie dies in Fig. 3b exemplarisch für die erste Aushebevorrichtung 22a dargestellt ist. Der rechteckige Wirkbereich 37 der ersten Aushebevorrichtung 22a wird durch die rechteckige Umschließungskontur 36, durch die in Y-Richtung benachbarte zweite Aushebevorrichtung 22b sowie durch die in X-Richtung benachbarte dritte Aushebevorrichtung 22c begrenzt. Aufgrund der gleichmäßigen Verteilung der Aushebevorrichtungen 22a-d in Schritt b) bildet die Aushebeposition X_{Aai}, Y_{Aai} der ersten Aushebevorrichtung 22a im gezeigten Beispiel den Mittelpunkt des rechteckigen Wirkbereichs 37.

In einem sich anschließenden Schritt d) werden die Aushebepositionen X_{Aa}, Y_{Aa}; X_{Ab}, Y_{Ab}; X_{Ac}, Y_{Ac}; X_{Ad}, Y_{Ad} der Aushebevorrichtungen 22a-d erneut festgelegt, und zwar unter Berücksichtigung des jeweiligen Wirkbereichs 37. Wie in Fig. 3b exemplarisch für die erste der vier Aushebevorrichtungen 22a-d dargestellt ist, erfolgt die erneute Festlegung der Aushebeposition X_{Aa}, Y_{Aa} der ersten Aushebevorrichtung 22a anhand eines Teilbereichs 38 des zu entnehmenden Werkstückteils 14, der innerhalb des Wirkbereichs 37 der ersten Aushebevorrichtung 22a liegt und der in Fig. 3b doppelt schraffiert dargestellt ist. Wie in Fig. 3b ebenfalls zu erkennen ist, weist der Teilbereich 38, der in dem Wirkbereich 37 liegt, bei dem in Fig. 3b dargestellten Beispiel zwei nicht miteinander verbundene Teilflächen auf. Die Aushebeposition X_{Aa}, Y_{Aa} der ersten Aushebevorrichtung 22a wird anhand einer geometrischen Eigenschaft des in dem Wirkbereich 37 positionierten Teilbereichs 38 des Werkstückteils 14 festgelegt. Im gezeigten Beispiel handelt es sich bei der geometrischen Eigenschaft um den Flächenschwerpunkt Xₛ, Yₛ des Teilbereichs 38, d.h. die neu festgelegte Aushebeposition X_{Aa}, Y_{Aa} entspricht dem Flächenschwerpunkt Xₛ, Yₛ des Teilbereichs 38. Entsprechend werden die Aushebepositionen X_{Ab}, Y_{Ab}, X_{Ac}, Y_{Ac}, X_{Ad}, Y_{Ad} der drei anderen Aushebevorrichtungen 22b-d festgelegt. Sofern im Wirkbereich 37 kein Teilbereich 38 des Werkstückteils 14 enthalten ist, bleibt die zuvor ermittelte initiale Position X_{Aai}, Y_{Aai} der ersten Aushebevorrichtung 22a unverändert.

Für den Fall, dass keine Kollisionen auftreten (s.u.) endet das (globale) Positionieren der Aushebevorrichtungen 22a-d mit Schritt d), d.h. die Aushebevorrichtungen 22a-d werden für die Entnahme des Werkstückteils 14 aus dem Restwerkstück 15 an den in Schritt d) festgelegten Aushebepositionen X_{Aa}, Y_{Aa}; X_{Ab}, Y_{Ab}; X_{Ac}, Y_{Ac}: X_{Ad}, Y_{Ad} positioniert, die von den initialen Aushebepositionen X_{Aai}, Y_{Aai}; X_{Abi}, Y_{Abi}; X_{Aci}, Y_{Aci}; X_{Adi}, Y_{Adi} in der Regel abweichen, wie dies in Fig. 3b für die erste Aushebevorrichtung 22a dargestellt ist.

Bei dem in Fig. 3b gezeigten Beispiel wird bei der erneuten Festlegung der Aushebepositionen X_{Aa}, Y_{Aa}; X_{Ab}, Y_{Ab} der ersten und zweiten Aushebevorrichtung 22a,b berücksichtigt, dass diese auf der gemeinsamen Längsschiene 27a angebracht sind, d.h. in X-Richtung bewegungs- bzw. zwangsgekoppelt sind, so dass die beiden Aushebevorrichtungen 22a,b stets dieselben Koordinaten in X-Richtung aufweisen. Da sich bei der erneuten Festlegung der Aushebepositionen die X-Koordinate X_{Aa} der ersten Aushebevorrichtung 22a von der X-Koordinate X_{Ab} der zweiten Aushebevorrichtung 22b unterscheidet, wird im gezeigten Beispiel als gemeinsame X-Koordinate der Aushebepositionen der ersten und zweiten Aushebevorrichtung 22a, 22b jeweils der Mittelwert 1 / 2 (X_{Aa} + X_{Ab}) der beiden X-Koordinaten der auf die weiter oben beschriebene Weise festgelegten X-Koordinaten der Aushebepositionen X_{Aa} bzw. X_{Ab} verwendet. Entsprechend wird mit der dritten und vierten Aushebevorrichtung 22c, 22d verfahren, die ebenfalls auf einer gemeinsamen Längsschiene 27b angebracht sind.

Bei der in Schritt d) erfolgten erneuten Festlegung der Aushebepositionen X_{Aa}, Y_{Aa}; X_{Ab}, Y_{Ab}; X_{Ac}, Y_{Ac}; X_{Ad}, Y_{Ad} wird nicht berücksichtigt, dass die Aushebevorrichtungen 22a-d Mindestabstände zueinander einhalten müssen. Um diese einzuhalten, wird nach Schritt d) nacheinander für jede der vier Aushebevorrichtungen 22a-d ein Schritt e) durchgeführt, der anhand der ersten Aushebevorrichtung 22a in Zusammenhang mit Fig. 3c beschrieben wird:
In Schritt e) wird zunächst ein Abstand A_{AB} der ersten Aushebevorrichtung 22a zur in Y-Richtung benachbarten zweiten Aushebevorrichtung 22b bestimmt und mit einem Mindestabstand A_{YM} verglichen, den die Aushebevorrichtungen 22a-d in Y-Richtung zueinander einhalten sollten. Ist der Abstand A_{AB} in Y-Richtung kleiner als der Mindestabstand A_{YM}, wird die erste Aushebevorrichtung 22a bzw. die Y-Koordinate der Aushebeposition Y_{Aa} in positiver Y-Richtung (d.h. in Fig. 3c nach oben) verändert und die Y-Koordinate der Aushebeposition Y_{Ab} der zweiten Aushebevorrichtung 22b wird in negativer Y-Richtung (d.h. in Fig. 3c nach unten) verändert, bis der Mindestabstand A_{YM} in Y-Richtung eingehalten wird. Entsprechend wird bezüglich der X-Koordinate verfahren: Für den Fall, dass die erste Aushebevorrichtung 22a einen Abstand A_{AC} zur dritten Aushebevorrichtung 22c aufweist, der kleiner ist als ein Mindestabstand A_{XM}, den die Aushebevorrichtungen 22a-d in X-Richtung zueinander einhalten sollten, wird die X-Koordinate der Aushebeposition X_{Aa} der ersten Aushebevorrichtung 22a in negativer X-Richtung (in Fig. 3c nach links) verändert und entsprechend wird die X-Koordinate der Aushebeposition X_{Ac} der dritten Aushebevorrichtung 22c in positiver X-Richtung (in Fig. 3c nach rechts) um den gleichen Betrag verändert, bis der Mindestabstand A_{XM} in X-Richtung eingehalten ist.

Bei allen Positionierbewegungen der Aushebevorrichtungen 22a-d in den Schritten b), d) und e) kann eine Rasterung der Werkstückauflage 17 berücksichtigt werden, wenn diese Durchtrittsöffnungen 19 für die Aushebeelemente 47 der Aushebevorrichtungen 22a-d aufweist. Da die Aushebeelemente 47 der Aushebevorrichtungen 22a-d unter den Durchtrittsöffnungen 19 platziert werden müssen, kann die Positionierung der Aushebevorrichtungen 22a-d nicht kontinuierlich, sondern nur in diskreten Schritten erfolgen, die dem Raster der Durchtrittsöffnungen 19 entspricht.

Für die zweite bis vierte Aushebevorrichtung 22b-d wird entsprechend verfahren, bis die jeweiligen Abstände A_{AB}, A_{AC}, A_{CD}, A_{BD} aller vier Aushebevorrichtungen 22a-d größer sind als die Mindestabstände A_{XM}, A_{YM}. Für den Fall in Fig. 3c nicht dargestellten Fall, dass drei oder mehr Aushebevorrichtungen in einer Richtung nebeneinander angeordnet sind, kann die Veränderung der Aushebepositionen von zwei benachbarten Aushebevorrichtungen 22a, 22b zur Einhaltung des Mindestabstands A_{XM} bzw. A_{YM} zu Folgekollisionen führen: Beispielsweise kann bei der Verschiebung der zweiten Aushebevorrichtung 22b nach rechts der Mindestabstand A_{XM} zu einer dritten, rechts benachbarten Aushebevorrichtung unterschritten werden. Derartige Folgekollisionen werden iterativ in Richtung der Verschiebung weiter aufgelöst, d.h. wird die zweite Aushebevorrichtung 22b bzw. die X-Koordinate der zweiten Aushebeposition X_{Ab} nach rechts geschoben, schiebt diese alle weiteren Aushebevorrichtungen, mit denen diese kollidieren würde, vor sich her ebenfalls nach rechts. Sofern bei der Auflösung der (Folge-)Kollisionen ein Rand bzw. ein Anschlag der Verfahrbarkeit erreicht wird, muss die Auflösungsrichtung umgekehrt werden, d.h. die Aushebevorrichtungen werden nach links verschoben. Bei einer Aushebevorrichtung, die z.B. in X-Richtung zur linken und zur rechten Seite den Mindestabstand A_{XM} nicht einhält, werden die beiden links und rechts benachbarten Aushebevorrichtungen von der mittleren Aushebevorrichtung weg verschoben, bis die festgelegten Mindestabstände A_{XM} links und rechts eingehalten werden. In gleicher Weise kann bei versetzter ("kämmender") Anordnung der Aushebevorrichtungen 22a-d zueinander in Y-Richtung eine Kollisionsprüfung und - behebung zwischen den Aushebevorrichtungen 22a-d und der jeweils benachbarten Längsschiene 27a,b erfolgen.

Werden in Schritt e) die Aushebepositionen X_{Aa}, Y_{Aa}; X_{Ab}, Y_{Ab}; X_{Ac}, Y_{Ac}; X_{Ad}, Y_{Ad} der Aushebevorrichtungen 22a-d verändert, verändern sich auch die entsprechenden Wirkbereiche 37, d.h. die Aushebevorrichtungen 22a-d sind möglicherweise nicht mehr optimal für die Entnahme des Werkstückteils 14 aus dem Restwerkstück 15 positioniert. Daher werden die weiter oben beschriebenen Schritte c), d) und e) in der Regel so lange wiederholt, bis ein Abbruchkriterium erreicht ist. Im einfachsten Fall kann es sich bei dem Abbruchkriterium um eine vorgegebene Anzahl von Wiederholungen bzw. von Iterationen handeln. Da bei einem solchen Abbruchkriterium nicht sichergestellt ist, dass das Werkstückteil 14 prozesssicher aus dem Restwerkstück 15 entnommen werden kann, ist es günstig, wenn ein anderes Abbruchkriterium gewählt wird.

Ein solches Abbruchkriterium besteht in einem Maß für die Veränderung der festgelegten Aushebepositionen X_{Aa}, Y_{Aa}; X_{Ab}, Y_{Ab}; X_{Ac}, Y_{Ac}: X_{Ad}, Y_{Ad} bei Durchführung der Schritte d) und e). Treten in diesen Schritten keine signifikanten Veränderungen der Aushebepositionen X_{Aa}, Y_{Aa}; X_{Ab}, Y_{Ab}; X_{Ac}, Y_{Ac}; X_{Ad}, Y_{Ad} mehr auf, ist davon auszugehen, dass eine (annähernd) optimale, prozesssichere Anordnung der Aushebevorrichtungen 22a-d für die Entnahme des Werkstückteils 14 aus dem Restwerkstück 15 aufgefunden wurde. Als Maß für die Veränderung der Aushebepositionen X_{Aa}, Y_{Aa}; X_{Ab}, Y_{Ab}; X_{Ac}, Y_{Ac}; X_{Ad}, Y_{Ad} kann beispielsweise der größte (geometrische) Abstand zwischen den jeweiligen Aushebepositionen X_{Aa}, Y_{Aa}; X_{Ab}, Y_{Ab}; X_{Ac}, Y_{Ac}; X_{Ad}, Y_{Ad} vor und nach Durchführung der Schritte d) und e) dienen.

Alternativ zu dem weiter oben beschriebenen Abbruchkriterium kann ein Bewertungskriterium bzw. eine Bewertungsfunktion als Abbruchkriterium verwendet werden, mit dem die Eignung der Aushebepositionen X_{Aa}, Y_{Aa}; ...für die Entnahme des Werkstückteils 14 aus dem Restwerkstück 15 bewertet wird. Das Bewertungskriterium beinhaltet typischerweise die Bestimmung der Anzahl der aktiven Aushebestifte 47, d.h. derjenigen Aushebestifte 47, die in Fig. 3a-c gestrichelt dargestellt sind, weil diese unter dem Werkstückteil 14 angeordnet sind und daher von diesem verdeckt sind. Je größer die Anzahl der aktiven Aushebestifte 47, desto besser ist typischerweise die Unterstützung des Werkstückteils 14 bei der Entnahme. Als Bewertungskriterium kann auch die Fläche der konvexen Hülle dienen, die von den aktiven Aushebestiften 47 aufgespannt wird. Die Fläche der konvexen Hülle sollte ebenso wie die Anzahl der aktiven Aushebestifte 47 möglichst groß werden. Ein weiteres Bewertungskriterium stellt das Verhältnis der Druckkraft p aller aktiven Aushebeelemente 47 zur Gewichtskraft g des Werkstückteils dar (vgl. Fig. 1). Auch das Maximum aller Abstände zwischen beliebigen Punkten des Werkstückteils 14 und einem jeweils nächstliegenden aktiven Aushebeelement 47 kann als Bewertungskriterium dienen.

Auch die Durchbiegung des Werkstückteils 14 bei der Auflage auf den aktiven Aushebestiften 47 der Aushebevorrichtungen 22a-d kann als Bewertungskriterium dienen. Für die Berechnung der Durchbiegung des Werkstückteils 14 können Finite-Element-Methoden verwendet werden. Zudem können mit solchen Berechnungen auch mögliche Verkantungen und Verhakungen des Werkstückteils 14 im Restwerkstück 15 erkannt werden. Die einzelnen Bewertungskriterien oder -module können abhängig von einem gewünschten Optimierungsgrad, Berechnungsaufwand oder von der Komplexität der zu entnehmenden Werkstückteile 14 für einen Bediener der Vorrichtung 16 bzw. der Bearbeitungsmaschine 1 oder durch das Programmiersystem für die Erstellung des Bearbeitungsprogramms für die Maschine 1 auswählbar sein oder algorithmisch festgelegt werden.

Zur Verwendung eines jeweiligen Bewertungskriteriums als Abbruchkriterium wird der ermittelte Wert des Bewertungskriteriums mit einem Schwellwert verglichen, der über- bzw. unterschritten werden muss, um das Verfahren abzubrechen. Der Schwellwert kann beispielsweise eine vorgegebene Anzahl von aktiven Aushebestiften 47, eine vorgegebenes Verhältnis der Fläche der konvexen Hülle, die von den aktiven Aushebestiften 47 aufgespannt wird, zur Fläche des Werkstückteils 14, ein vorgegebenes Verhältnis von Druckkraft p zu Gewichtskraft g des Werkstückteils 14, etc. bilden. Werden die Aushebepositionen X_{Aa}, Y_{Aa};... , X_{Ad}, Y_{Ad} für die Entnahme des Werkstückteils 14 aus dem Restwerkstück 15 aufgrund des Überschreitens des Schwellwerts als geeignet bewertet, sind keine weiteren Wiederholungen bzw. Iterationsschritte erforderlich und das Verfahren wird beendet.

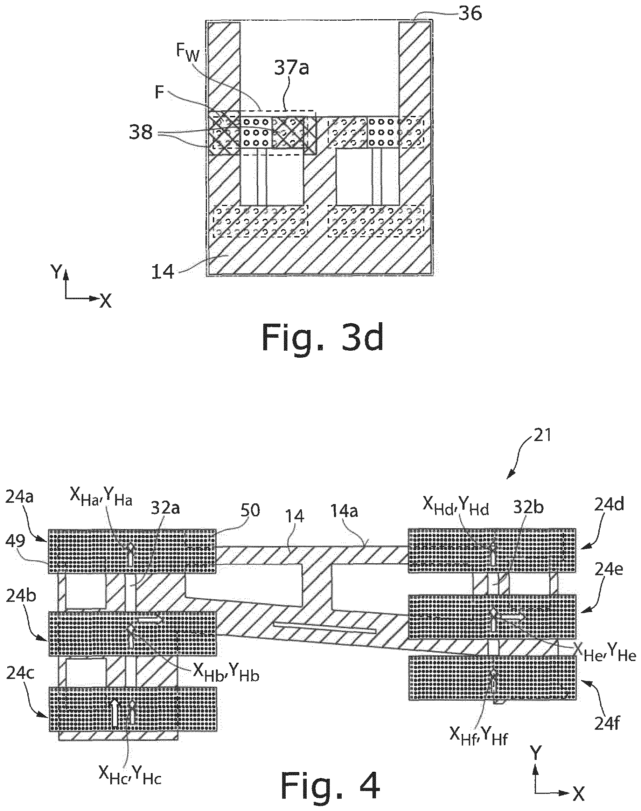

Nach dem Erreichen des Abbruchkriteriums kann das weiter oben beschriebene Verfahren mit kleineren, lokalen Wirkbereichen 37a (vgl. Fig. 3d) der Aushebevorrichtungen 22a-d erneut durchgeführt werden, bis ein jeweiliges Abbruchkriterium erfüllt ist. Durch die kleineren Wirkbereiche 37a ist gewährleistet, dass eine lokale Optimierung erfolgt. Analog zu der in Zusammenhang mit Fig. 3c dargestellten Weise erfolgt das erneute Festlegen der Aushebepositionen der Aushebevorrichtungen 22a-d anhand eines (in Fig. 3d doppelt schraffierten) Teilbereichs 38 des Werkstückteils 14, der innerhalb des (kleineren) lokalen Wirkbereichs 37a liegt.

Der lokale Wirkbereich 37a weist Abmessungen, d.h. eine Länge und eine Breite, auf, die die Abmessungen (Länge und Breite) der (ersten) Aushebevorrichtung 22a, genauer gesagt der rechteckigen Stirnfläche des ersten Aushebegehäuses 46a, um mindestens 10 %, aber typischerweise um nicht mehr als 50 % übersteigen. Der Mittelpunkt des lokalen Wirkbereichs 37a und der Mittelpunkt der ersten Aushebevorrichtung 22a stimmen im gezeigten Beispiel überein. Der lokale Wirkbereich 37a kann insbesondere unabhängig von der Positionierung der anderen Aushebevorrichtungen 22b-d und der Umschließungskontur 36 festgelegt werden. Die Wiederholung der Schritte c), d) und e) sowie ggf. die Bewertung der Aushebepositionen X_{Aa}, Y_{Aa,} ..., X_{Ad}, Y_{Ad} nach einer vorgegebenen Anzahl von Wiederholungen bzw. von Iterationen kann auf die weiter oben in Zusammenhang mit der (globalen) Positionierung beschriebene Weise erfolgen.

Analog zur Festlegung der Aushebepositionen X_{Aa}, Y_{Aa,} ..., X_{Ad}, Y_{Ad} kann auch die Festlegung der Haltepositionen X_{Ha,} Y_{Ha}, ..., X_{Hd}, Y_{Hd} der vier Haltevorrichtungen 24a-d der Vorrichtung 16 erfolgen. Die Positionierbewegung der Haltevorrichtungen 24a-d kann kontinuierlich erfolgen, da keine Rasterung der Werkstückauflage 17 zu berücksichtigen ist. Fig. 4 zeigt ein Beispiel einer Gegenhalteeinheit 21, die an Stelle der weiter oben beschriebenen Gegenhalteeinheit 21 nicht vier, sondern sechs Haltevorrichtungen 24a-f aufweist, von denen jeweils drei Haltevorrichtungen 24a-c an einer Längsschiene 32a und drei Haltevorrichtungen 24d-f an einer weiteren Längsschiene 32b befestigt sind. Hierbei sind die an einer gemeinsamen Längsschiene 32a,b angeordneten Haltevorrichtungen 24a-c, 24d-f unabhängig voneinander in Y-Richtung bewegbar. Die Längsschienen 32a,b sind unabhängig voneinander in X-Richtung bewegbar. Die Bewegung erfolgt dabei stets parallel zur Lagerungsebene 18.

Die Haltepositionen X_{Ha,} Y_{Ha}, ..., X_{Hf}, Y_{Hf} der in Fig. 4 gezeigten sechs Haltevorrichtungen 24a-f der Gegenhalteeinheit 21 werden analog zu den Aushebepositionen X_{Aa}, Y_{Aa}, ..., X_{Ad}, Y_{Ad} der Aushebevorrichtungen 22a-d bestimmt, d.h. auf die in Zusammenhang mit Fig. 3a-d beschriebene Weise. Wie in Fig. 2 zu erkennen ist, weisen die Haltevorrichtungen 24a-f jeweils ein kastenförmiges Gehäuse 48a, 48b, ... mit einer in Fig. 4 zu erkennenden, rechteckförmigen planen Anlageplatte 49 auf, die mit einer Vielzahl von Bohrungen in einer rasterförmigen Anordnung versehen ist. Die Bohrungen nehmen Halteelemente in Form von Sauggreifern 50 auf, die senkrecht zur Anlageplatte 49 elastisch verformbare Saugermanschetten aufweisen, um das Werkstückteil 14 bei der Entnahme aus dem Restwerkstück 15 anzusaugen.

Ähnlich wie bei den Aushebepositionen X_{Aa}, Y_{Aa,} ..., X_{Ad}, Y_{Ad} können die Haltepositionen X_{Ha,} Y_{Ha}, ..., X_{Hf}, Y_{Hf} mit Hilfe von einem oder von mehreren Bewertungskriterien bewertet werden, die beispielsweise ausgewählt sind aus der Gruppe: Zahl der aktiven Halteelemente 50 der Haltevorrichtungen 24a-f, Fläche der konvexen Hülle, die von den aktiven Halteelementen 50 aufgespannt wird, Verhältnis der Haltekraft h (vgl. Fig. 1) der aktiven Halteelemente 50 zur Gewichtskraft g des zu entnehmenden Werkstückteils 14, maximaler Abstand aller Punkte des Werkstückteils 14 zu einem jeweils nächstliegenden aktiven Halteelement 50, sowie Durchbiegung des Werkstückteils 14 bei der Halterung an den aktiven Halteelementen 50. Die Bewertung der Durchbiegung des Werkstückteils 14 kann mit Hilfe von Finite-Element-Methoden erfolgen.

Ein weniger komplexes Bewertungskriterium stellt das Verhältnis zwischen der Haltekraft h aller aktiven, das Werkstückteil 14 bei der Entnahme ansaugenden Halteelementen 50 der Haltevorrichtungen 24a-f zur Gewichtskraft g des Werkstückteils 14 dar. Liegt die Trag- bzw. Haltekraft aller Halteelemente 50 um einen vorgegebenen Faktor bzw. Schwellwert über der Gewichtskraft des zu entnehmenden Werkstückteils 14, kann das Werkstückteil 14 bei der Entnahme prozesssicher von den Haltevorrichtungen 24a-f gehalten werden. Das Überschreiten dieses Schwellwerts kann als Abbruchkriterium bei der (iterativen) Festlegung der Haltepositionen X_{Ha,} Y_{Ha}, ..., X_{Hf}, Y_{Hf} der Haltevorrichtungen 24a-f dienen.

Nachfolgend wird anhand von Fig. 2 der Entnahmevorgang des Werkstückteils 14 aus dem Restwerkstück 15 beschrieben, der nach dem Festlegen der Aushebepositionen X_{Aa}, Y_{Aa,} ... und dem Festlegen der Haltepositionen X_{Ha}, Y_{Ha}, ... erfolgt. Zunächst werden das bearbeitete Blech 2 und die Werkstückauflage 17 relativ zueinander derart positioniert, dass das Werkstückteil 14 eine hinreichende Anzahl von Durchtrittsöffnungen 19 der Werkstückauflage 17 überdeckt. Als Stellvorrichtung fungiert die Blech-Bewegungseinheit 10, mittels derer das bearbeitete Blech 2 mit dem Werkstückteil 14 und dem Restwerkstück 15 in der X-Richtung des Koordinatensystems der Bearbeitungsmaschine 1 zugestellt werden kann.

Numerisch gesteuert wird die Aushebevorrichtungs-Bewegungseinrichtung 26 unterhalb der Werkstückauflage 17 derart betätigt, dass die Aushebevorrichtungen 22a-d die auf die weiter oben beschriebene Weise festgelegten Aushebepositionen X_{Aa}, Y_{Aa,} ..., X_{Ad}, Y_{Ad} unterhalb des Werkstückteils 14 anfahren. Zeitgleich mit der Positionierung der Aushebevorrichtungen 22a-d werden an der gegenüberliegenden Seite der Werkstückauflage 17 die Haltevorrichtungen 24a-d durch numerisch gesteuerte Betätigung der Haltevorrichtungs-Bewegungseinrichtung 31 in die Haltepositionen X_{Ha,} Y_{Ha}, ..., X_{Hd}, Y_{Hd} oberhalb des in der Entladeposition befindlichen Werkstückteils 14 verfahren.

Nachfolgend werden die Haltevorrichtungen 22a-d durch eine entsprechende Vertikalbewegung der Haltevorrichtungs-Bewegungseinrichtung 31 abgesenkt und dadurch auf das bearbeitete Blech 2 bzw. auf das Werkstückteil 14 und das Restwerkstück 15 aufgesetzt. Dabei werden die Saugermanschetten der Sauggreifer 50 komprimiert und infolgedessen stärker gefaltet und in das Innere der Bohrungen an der Anlageplatte 49 der Haltevorrichtungen 24a-d zurückgedrängt, bis schließlich die Anlageplatten 49 der Haltevorrichtungen 24a-d auf der Blechoberfläche aufsetzen.

Anschließend werden an den Aushebevorrichtungen 22a-d diejenigen (aktiven) Aushebestifte 47 betätigt, die unterhalb des Werkstückteils 14 liegen und für welche das Werkstückteil 14 über Durchtrittsöffnungen 19 der Werkstückauflage 17 zugänglich ist. Die übrigen Aushebestifte 47 der Aushebevorrichtungen 22a-d behalten ihre Ausgangslage bei. Dabei werden die ausgefahrenen Aushebestifte 47 an die Unterseite des Werkstückteils 14 angelegt. Das Werkstückteil 14 wird nun an seiner Unterseite durch die Aushebevorrichtungen 22a-d in einer Entnahmerichtung Z beaufschlagt und an seiner Oberseite durch die Haltevorrichtungen 24a-d, genauer gesagt durch die Anlageplatte 49, großflächig in der Entnahmerichtung Z abgestützt. Die Sauggreifer 50 der Haltevorrichtungen 24a-d liegen an der Oberseite des parallel zu der Werkstückebene 18 ausgerichteten Werkstückteils 14 mit einer aus ihrer elastischen Verformung resultierenden Vorspannung an.

Ein Steuersignal der Steuereinrichtung 35 bewirkt, dass die Aushebestifte 47 der Aushebevorrichtungen 22a-d das Werkstückteil 14 in einer Entnahmerichtung (Z-Richtung) aus dem Restwerkstück 15 drücken und gleichzeitig die Haltevorrichtungen 24a-d mittels der Haltevorrichtungs-Bewegungseinrichtung 31 synchron in der Entnahmerichtung Z bewegt werden. Dabei wird das zunächst in der Ebene des Restwerkstücks 15 angeordnete Werkstückteil 14 aus dem Restwerkstück 15 ausgehoben bzw. entnommen.

Sobald die Haltevorrichtungen 24a-d einen deutlichen Abstand von der Oberfläche des auf der Werkstückauflage 17 verbliebenen Restwerkstücks 15 aufweisen, wird der Unterdruckerzeuger der Haltevorrichtungen 24a-d eingeschaltet. Infolgedessen wird das Werkstückteil 14 an den Haltevorrichtungen 24a-d festgelegt bzw. fixiert.

Ist das Werkstückteil 14 an den Haltevorrichtungen 24a-d fixiert, werden die Aushebestifte 47, die zuvor das Werkstückteil 14 beaufschlagt haben, in das Aushebegehäuse 46a-d der Aushebevorrichtungen 22a-d zurückgezogen. Die Haltevorrichtungen 24a-d verfahren sodann mit dem daran fixierten Werkstückteil 14 mit Hilfe der Haltevorrichtungs-Bewegungseinrichtung 31 aus dem Nahbereich der Werkstückauflage 17. Um das Werkstückteil 14 an einem Ablageort für das Werkstückteil 14 von den Haltevorrichtungen 24a-d zu lösen, werden die Sauggreifer 50, die das Werkstückteil 14 halten, drucklos geschaltet.

Die Funktionsweise der Entnahmevorrichtung 16 wurde vorstehend anhand einer Bearbeitungsmaschine 1 mit kombinierter Bewegung des Werkstücks 2 und des Laserschneidkopfs 6 beschrieben. Die Entnahmevorrichtung 16 lässt sich jedoch in analoger Weise auch an einer Bearbeitungsmaschine einsetzen, in der das Werkstück während der Bearbeitung ruht und beispielsweise auf einer Stegauflage angeordnet ist, die mit Hilfe eines Palettenwechslers in den Bearbeitungsbereich der Maschine hinein und aus ihm heraus bewegbar ist.

Wird die Entnahmevorrichtung 16 zur Automatisierung einer solchen Flying-Optics-Maschine eingesetzt, so ist dies auch ohne zusätzliche Aushebevorrichtung möglich. Zur Entnahme eines Werkstückteils aus dem Restwerkstück werden die Haltevorrichtungen 24a-d in diesem Fall zunächst auf der Oberfläche des Werkstückteils 14 aufgesetzt und anschließend wird der Unterdruckerzeuger der Haltevorrichtungen 24a-d eingeschaltet. Die Haltevorrichtungen 24a-d werden dadurch aus einem Freigabezustand in einen Fixierungszustand überführt, in dem das Werkstückteil 14 an den Haltevorrichtungen 24a-d festgelegt bzw. fixiert ist. Um ein Fixieren des Restwerkstücks 15 an den Haltevorrichtungen 24a-d zu verhindern, können die Halteelemente 50 beispielsweise als Aktivsauger ausgeführt sein, deren Öffnungszustand mittels einer Steuerung veränderbar ist. Eine Anlageplatte 49 ist in diesem Beispiel nicht notwendig.

## Patentansprüche

1. Verfahren zum Festlegen von Aushebepositionen (X_{Aa}, Y_{Aa,} ...) von mindestens zwei jeweils eine Mehrzahl von Aushebeelementen (47) aufweisenden Aushebevorrichtungen (22a-d) und/oder von Haltepositionen (X_{Ha}, Y_{Ha}, ...) von mindestens zwei jeweils eine Mehrzahl von Halteelementen (50) aufweisenden Haltevorrichtungen (24a-f) für das Entnehmen eines Werkstückteils (14) aus einem Restwerkstück (15), wobei die Aushebevorrichtungen (22a-d) und/oder die Haltevorrichtungen (24a-f) parallel zu einer Lagerungsebene (18) des aus dem Restwerkstück (15) zu entnehmenden Werkstückteils (14) bewegbar sind, gekennzeichnent durch die Schritte:
a) Bestimmen einer das zu entnehmende Werkstückteil (14) umschließenden, insbesondere rechteckigen Umschließungskontur (36),
b) Initiales Festlegen von Aushebepositionen (X_{Aa}, Y_{Aa,} ...) von mindestens zwei der Aushebevorrichtungen (22a-d) und/oder von Haltepositionen (X_{Ha}, Y_{Ha}, ...) von mindestens zwei der Haltevorrichtungen (24a-d) relativ zur Umschließungskontur (36),
c) Festlegen eines Wirkbereichs (37, 37a) für jede der Aushebevorrichtungen (22a-d) bei ihrer jeweils festgelegten Aushebeposition (X_{Aa}, Y_{Aa,} ...) und/oder für jede der Haltevorrichtungen (24a-f) bei ihrer jeweils festgelegten Halteposition (X_{Ha}, Y_{Ha}, ...), sowie
d) Erneutes Festlegen der Aushebepositionen (X_{Aa}, Y_{Aa}, ...) der Aushebevorrichtungen (22a-d) und/oder der Haltepositionen (X_{Ha}, Y_{Ha}, ...) der Haltevorrichtungen (24a-d) anhand eines in dem jeweiligen Wirkbereich (37, 37a) positionierten Teilbereichs (38) des zu entnehmenden Werkstückteils (14).

2. Verfahren nach Anspruch 1, bei dem in Schritt a) die Aushebepositionen (X_{Aa}, Y_{Aa}, ...) und/oder die Haltepositionen (X_{Ha}, Y_{Ha}, ...) initial mit gleichen Abständen zur Umschließungskontur (36) festgelegt werden.

3. Verfahren nach Anspruch 1 oder 2, bei dem in Schritt c) das Festlegen der Aushebepositionen (X_{Aa}, Y_{Aa,} ...) und/oder der Haltepositionen (X_{Ha}, Y_{Ha}, ...) anhand mindestens einer geometrischen Eigenschaft des in dem jeweiligen Wirkbereich (37, 37a) befindlichen Teilbereichs (38) des Werkstückteils (14) erfolgt, wobei die geometrische Eigenschaft bevorzugt ein Flächenschwerpunkt (Xs, Ys) des Teilbereichs (38) ist.

4. Verfahren nach Anspruch 3, bei dem die Aushebeposition (X_{Aa}, Y_{Aa,} ...) und/oder die Halteposition (X_{Ha}, Y_{Ha}, ...) einer Aushebevorrichtung (22a-d) und/oder einer Haltevorrichtung (24a-d) mit dem Flächenschwerpunkt (Xs, Ys) des in dem jeweiligen Wirkbereich (37, 37a) befindlichen Teilbereichs (38) des Werkstückteils (14) übereinstimmend festgelegt wird.

5. Verfahren nach einem der vorhergehenden Ansprüche, bei dem nach Schritt d) nacheinander für jede Aushebevorrichtung (22a-d) und/oder für jede Haltevorrichtung (24a-f) folgender Schritt durchgeführt wird:
e) Bestimmen mindestens eines Abstands (A_{AB}, A_{AC}) der Aushebevorrichtung (22a) zu benachbarte(n) Aushebevorrichtung(en) (22b-d) und/oder der Haltevorrichtung (24a) zu benachbart(en) Haltevorrichtung(en) (24b-d), sowie, für den Fall, dass der Abstand (A_{AB}, AAc, A_{AD}, A_{AE}, A_{AF}) unter einem Mindestabstand (A_{YM}, A_{XM}) liegt,
Verändern der festgelegten Aushebeposition (X_{Aa}, Y_{Aa}) der Aushebevorrichtung (22a) und/oder der festgelegten Aushebeposition(en) (X_{Ab}, Y_{Ab}, ...) der benachbarten Aushebevorrichtung(en) (22b-d) und/oder
Verändern der festgelegten Halteposition (X_{Ha}, Y_{Ha}) der Haltevorrichtung (24a) und/oder der festgelegten Halteposition(en) (X_{Hb}, Y_{Hb}...) der benachbarten Haltevorrichtung(en) (24b-f), bis der Mindestabstand (A_{YM}, A_{XM}) erreicht wird.

6. Verfahren nach einem der vorhergehenden Ansprüche, bei dem das Festlegen und/oder das Verändern von Aushebepositionen (X_{Aa}, Y_{Aa,} ...) der Aushebevorrichtungen (22a-d) in diskreten Schritten erfolgt, um Durchtrittsöffnungen (19) einer Werkstückauflage (17) zum Durchtritt von Aushebeelementen (47) der Aushebevorrichtungen (22a-d) zu berücksichtigen.

7. Verfahren nach Anspruch 5 oder 6, bei dem die Schritte c), d) und e) wiederholt werden, bis ein Abbruchkriterium erreicht ist.

8. Verfahren nach Anspruch 7, bei dem ein Maß für die Veränderung der festgelegten Aushebepositionen (X_{Aa}, Y_{Aa,} ...) und/oder der festgelegten Haltepositionen (X_{Ha}, Y_{Ha}, ...) in Schritt d) und/oder in Schritt e) das Abbruchkriterium bildet.

9. Verfahren nach Anspruch 8, bei dem nach einer vorgegebenen Anzahl von Wiederholungen die festgelegten Aushebepositionen (X_{Aa}, Y_{Aa,} ...) und/oder die festgelegten Haltepositionen (X_{Ha}, Y_{Ha}, ...) mit einem Bewertungskriterium bewertet werden, wobei bevorzugt das Bewertungskriterium als Abbruchkriterium verwendet wird.

10. Verfahren nach Anspruch 9, bei dem das Bewertungskriterium für die Aushebepositionen (X_{Aa}, Y_{Aa,} ...) ausgewählt ist oder auswählbar ist aus der Gruppe umfassend: Zahl der aktiven Aushebeelemente (47) der Aushebevorrichtungen (22a-d), Fläche der konvexen Hülle, die von den aktiven Aushebeelementen (47) aufgespannt wird, Verhältnis der Druckkraft (p) der aktiven Aushebeelemente (47) zur Gewichtskraft (g) des Werkstückteils (14), Maximaler Abstand aller beliebigen Punkte des Werkstückteils (14) zu einem jeweils nächstliegenden aktiven Aushebeelement (47), Durchbiegung des Werkstückteils (14) bei der Auflage auf den aktiven Aushebeelementen (47) der Aushebevorrichtungen (22a-d).

11. Verfahren nach Anspruch 9 oder 10, bei dem das Bewertungskriterium für die Haltepositionen (X_{Ha}, Y_{Ha}, ...) ausgewählt ist oder auswählbar ist aus der Gruppe umfassend: Zahl der aktiven Halteelemente (50) der Haltevorrichtungen (24a-f), Fläche der konvexen Hülle, die von den aktiven Halteelementen (50) aufgespannt wird, Verhältnis der Haltekraft (h) der aktiven Halteelemente (50) zur Gewichtskraft (g) des Werkstückteils (14), maximaler Abstand aller beliebigen Punkte des Werkstückteils (14) zu einem jeweils nächstliegenden aktiven Halteelement (50), Durchbiegung des Werkstückteils (14) bei der Halterung an den aktiven Halteelementen (50).

12. Verfahren nach einem der vorhergehenden Ansprüche, bei dem in Schritt c) ein Wirkbereich (37, 37a) einer jeweiligen Aushebevorrichtung (22a) festgelegt wird, der durch die Umschließungskontur (36) und mindestens eine benachbarte Aushebevorrichtung (22b, 22c) begrenzt wird und/oder bei dem in Schritt c) ein Wirkbereich (37, 37a) einer jeweiligen Haltevorrichtung (24a) festgelegt wird, der durch die Umschließungskontur (36) und mindestens eine benachbarte Haltevorrichtung (24b, 24c) begrenzt wird.

13. Verfahren nach Anspruch 12, bei dem nach dem Erreichen des Abbruchkriteriums ein kleinerer, lokaler Wirkbereich (37a) für jede der Aushebevorrichtungen (22a-d) und/oder für jede der Haltevorrichtungen (24a-f) festgelegt wird, wobei die Schritte c), d) und e) ein- oder mehrmals erneut durchgeführt werden, bis ein Abbruchkriterium erreicht ist.

14. Verfahren nach Anspruch 13, bei dem der lokale Wirkbereich (37a) Abmessungen aufweist, welche die Abmessungen der Aushebevorrichtung (22a) und/oder der Haltevorrichtung (24a) um mindestens 10% und um nicht mehr als 50% übersteigt.

15. Verfahren nach einem der vorhergehenden Ansprüche, bei dem mindestens zwei der Aushebevorrichtungen (22a,b; 22c,d) und/oder mindestens zwei der Haltevorrichtungen (24a-f) bei der Bewegung parallel zur Lagerungsebene (18) durch eine gemeinsame Tragstruktur (27a, 27b) in einer Bewegungsrichtung (X) bewegungsgekoppelt sind.

16. Verfahren nach einem der vorhergehenden Ansprüche, bei dem in einem Schritt b) vorausgehenden Schritt die Anzahl der zur Entnahme des Werkstückteils (14) erforderlichen Aushebevorrichtungen (22a-d) und/oder Haltevorrichtungen (24a-f) bestimmt wird.

17. Verfahren nach einem der vorhergehenden Ansprüche, bei dem das Werkstückteil (14) zumindest während eines Teils der Entnahme aus dem Restwerkstück (15) zwischen den mindestens zwei an den Aushebepositionen (X_{Aa}, Y_{Aa,} ...) angeordneten Aushebevorrichtungen (22a-d) und den mindestens zwei an den Haltepositionen (X_{Ha}, Y_{Ha}, ...) angeordneten Haltevorrichtungen (24a-f) aufgenommen wird.

18. Computerprogrammprodukt, welches zur Durchführung aller Schritte des Verfahrens nach einem der vorhergehenden Ansprüche ausgebildet ist, wenn das Computerprogramm auf einer Datenverarbeitungsanlage abläuft.

19. Vorrichtung zum Entnehmen eines Werkstückteils (14) aus einem Restwerkstück (15), umfassend:
eine Aushebeeinheit (20) mit mindestens zwei Aushebevorrichtungen (22a-d), die jeweils eine Mehrzahl von Aushebeelementen (47) aufweisen, sowie eine Gegenhalteeinheit (21) mit mindestens zwei Haltevorrichtungen (24a-f), die jeweils eine Mehrzahl von Halteelementen (50) aufweisen,
eine Aushebevorrichtungs-Bewegungseinrichtung (26) zur Bewegung der Aushebevorrichtungen (22a-d) parallel zu einer Lagerungsebene (18) des Restwerkstücks (15),
eine Haltevorrichtungs-Bewegungseinrichtung (31) zur Bewegung der Haltevorrichtungen (24a-f) parallel zu der Lagerungsebene (18) des Restwerkstücks (15),
**gekennzeichnet durch** eine Steuerungseinheit (35) zur Steuerung der Aushebevorrichtungs-Bewegungseinrichtung (26) zur Bewegung der Aushebevorrichtungen (22a-d) an festgelegte Aushebepositionen (X_{Aa}, Y_{Aa}, ...) und zur Steuerung der Haltevorrichtungs-Bewegungseinrichtung (31) zur Bewegung der Haltevorrichtungen (24a-d) an festgelegte Haltepositionen (X_{Ha}, Y_{Ha}, ...), wobei die Steuerungseinheit (35) ausgebildet ist, die Aushebepositionen (X_{Aa}, Y_{Aa,} ...) und/oder die Haltepositionen (X_{Ha}, Y_{Ha}, ...) gemäß einem Verfahren festzulegen, das folgende Schritte umfasst:
a) Bestimmen einer das zu entnehmende Werkstückteil (14) umschließenden, insbesondere rechteckigen Umschließungskontur (36),
b) Initiales Festlegen von Aushebepositionen (X_{Aa}, Y_{Aa,} ...) von mindestens zwei der Aushebevorrichtungen (22a-d) und/oder von Haltepositionen (X_{Ha}, Y_{Ha}, ...) von mindestens zwei der Haltevorrichtungen (24a-d) relativ zur Umschließungskontur (36),
c) Festlegen eines Wirkbereichs (37, 37a) für jede der Aushebevorrichtungen (22a-d) bei ihrer jeweils festgelegten Aushebeposition (X_{Aa}, Y_{Aa,} ...) und/oder für jede der Haltevorrichtungen (24a-f) bei ihrer jeweils festgelegten Halteposition (X_{Ha}, Y_{Ha}, ...), sowie
d) Erneutes Festlegen der Aushebepositionen (X_{Aa}, Y_{Aa,} ...) der Aushebevorrichtungen (22a-d) und/oder der Haltepositionen (X_{Ha}, Y_{Ha}, ...) der Haltevorrichtungen (24a-d) anhand eines in dem jeweiligen Wirkbereich (37, 37a) positionierten Teilbereichs (38) des zu entnehmenden Werkstückteils (14).

20. Bearbeitungsmaschine (1) zum trennenden Bearbeiten von plattenartigen Werkstücken (15), insbesondere von Blechen, mittels eines Bearbeitungswerkzeugs (3), weiter umfassend: eine Vorrichtung (16) nach Anspruch 19 zur Entnahme eines beim trennenden Bearbeiten von einem Restwerkstück (15) getrennten Werkstückteils (14).

## Claims

1. Method for fixing lift-out positions (X_{Aa}, Y_{Aa,} ....) of at least two lift-out apparatuses (22a-d) which each have a plurality of lift-out elements (47) and/or retention positions (X_{Ha}, Y_{Ha}, ...) of at least two retention apparatuses (24a-f) which each have a plurality of retention elements (50) for removing a workpiece part (14) from a remaining workpiece (15), wherein the lift-out apparatuses (22a-d) and/or the retention apparatuses (24a-f) are movable parallel with a bearing plane (18) of the workpiece part (14) which is intended to be removed from the remaining workpiece (15), **characterised by** the steps of:
a) determining an in particular rectangular enclosing contour (36) which encloses the workpiece part (14) which is intended to be removed,
b) initially fixing lift-out positions (X_{Aa}, Y_{Aa}, ....) of at least two of the lift-out apparatuses (22a-d) and/or retention positions (X_{Ha}, Y_{Ha}, ...) of at least two of the retention apparatuses (24a-d) relative to the enclosing contour (36),
c) fixing an active region (37, 37a) for each of the lift-out apparatuses (22a-d) at the respective fixed lift-out position (X_{Aa}, Y_{Aa}, ....) thereof and/or for each of the retention apparatuses (24a-f) at the respective fixed retention position (X_{Ha}, Y_{Ha}, ...) thereof, and
d) fixing the lift-out positions (X_{Aa}, Y_{Aa}, ....) of the lift-out apparatuses (22a-d) and/or the retention positions (X_{Ha}, Y_{Ha}, ...) of the retention apparatuses (24a-d) once again based upon a partial region (38), which is positioned in the respective active region (37, 37a), of the workpiece part (14) which is intended to be removed.

2. Method according to claim 1, wherein in step a) the lift-out positions (X_{Aa}, Y_{Aa}, ....) and/or the retention positions (X_{Ha}, Y_{Ha}, ...) are initially fixed at the same distances with respect to the enclosing contour (36).

3. Method according to claim 1 or 2, wherein in step c) the fixing of the lift-out positions (X_{Aa}, Y_{Aa}, ....) and/or the retention positions (X_{Ha}, Y_{Ha}, ...) is carried out on the basis of at least one geometric property of the partial region (38) of the workpiece part (14) located in the respective active region (37, 37a), wherein the geometric property is preferably a centroid of an area (Xs, Ys) of the partial region (38).

4. Method according to claim 3, wherein the lift-out position (X_{Aa}, Y_{Aa}, ....) and/or the retention position (X_{Ha}, Y_{Ha}, ...) of a lift-out apparatus (22a-d) and/or a retention apparatus (24a-d) is fixed so as to correspond to the centroid of an area (Xs, Ys) of the partial region (38) of the workpiece part (14) located in the respective active region (37, 37a).

5. Method according to any one of the preceding claims, wherein after step d) the following step is carried out successively for each lift-out apparatus (22a-d) and/or for each retention apparatus (24a-f):
e) determining at least one distance (A_{AB}, A_{AC}) of the lift-out apparatus (22a) from adjacent lift-out apparatus(es) (22b-d) and/or of the retention apparatus (24a) from adjacent retention apparatus(es) (24b-d) and, in the event that the distance (A_{AB}, A_{AC}, A_{AD}, A_{AE}, A_{AF}) is lower than a minimum distance (A_{YM}, A_{XM}),
changing the fixed lift-out position (X_{Aa}, Y_{Aa}) of the lift-out apparatus (22a) and/or the fixed lift-out position(s) (X_{Ab}, Y_{Ab}, ....) of the adjacent lift-out apparatus (es) (22b-d) and/or changing the fixed retention position (X_{Ha}, Y_{Ha}) of the retention apparatus (24a) and/or the fixed retention position (s) (X_{Hb}, Y_{Hb}...) of the adjacent retention apparatus (es) (24b-f) until the minimum distance (A_{YM}, A_{XM}) is reached.

6. Method according to any one of the preceding claims, wherein the fixing and/or the changing of lift-out positions (X_{Aa}, Y_{Aa}, ....) of the lift-out apparatuses (22a-d) is carried out in discrete steps in order to take into account through-openings (19) of a workpiece support (17) for introducing lift-out elements (47) of the lift-out apparatuses (22a-d).

7. Method according to claim 5 or 6, wherein the steps c), d) and e) are repeated until a break-off criterion is reached.

8. Method according to claim 7, wherein a measure for the change of the fixed lift-out positions (X_{Aa}, Y_{Aa}, ....) and/or the fixed retention positions (X_{Ha}, Y_{Ha}, ...) forms the break-off criterion in step d) and/or in step e).

9. Method according to claim 8, wherein after a predetermined number of repetitions the fixed lift-out positions (X_{Aa}, Y_{Aa}, ....) and/or the fixed retention positions (X_{Ha}, Y_{Ha}, ...) are evaluated with an evaluation criterion, wherein preferably the evaluation criterion is used as a break-off criterion.

10. Method according to claim 9, wherein the evaluation criterion for the lift-out positions (X_{Aa}, Y_{Aa}, ....) is or can be selected from the group comprising: the number of active lift-out elements (47) of the lift-out apparatuses (22a-d), surface-area of the convex hull which is defined by the active lift-out elements (47), ratio of the pressure force (p) of the active lift-out elements (47) relative to the weight force (g) of the workpiece part (14), maximum distance of all freely selectable points of the workpiece part (14) from a respective nearest active lift-out element (47), deflection of the workpiece part (14) during support on the active lift-out elements (47) of the lift-out apparatuses (22a-d) .

11. Method according to claim 9 or 10, wherein the evaluation criterion for the retention positions (X_{Ha}, Y_{Ha}, ...) is or can be selected from the group comprising: the number of active retention elements (50) of the retention apparatuses (24a-f), surface-area of the convex hull which is defined by the active retention elements (50), ratio of the retention force (h) of the active retention elements (50) relative to the weight force (g) of the workpiece part (14), maximum distance of all freely selectable points of the workpiece part (14) from a respective nearest active retention element (50), deflection of the workpiece part (14) during retention on the active retention elements (50).

12. Method according to any one of the preceding claims, wherein in step c) an active region (37, 37a) of a respective lift-out apparatus (22a) is fixed that is delimited by the enclosing contour (36) and at least one adjacent lift-out apparatus (22b, 22c) and/or wherein in step c) an active region (37, 37a) of a respective retention apparatus (24a) is fixed that is delimited by the enclosing contour (36) and at least one adjacent retention apparatus (24b, 24c).

13. Method according to claim 12, wherein, after the break-off criterion is reached, a smaller, local active region (37a) for each of the lift-out apparatuses (22a-d) and/or for each of the retention apparatuses (24a-f) is fixed, wherein the steps c), d) and e) are carried out again once or repeatedly until a break-off criterion is reached.

14. Method according to claim 13, wherein the local active region (37a) has dimensions which exceed the dimensions of the lift-out apparatus (22a) and/or the retention apparatus (24a) by at least 10% and by no more than 50%.

15. Method according to any one of the preceding claims, wherein at least two of the lift-out apparatuses (22a, b; 22c, d) and/or at least two of the retention apparatuses (24a-f) are connected in terms of movement during the movement parallel with the bearing plane (18) by a common carrier structure (27a, 27b) in a movement direction (X).

16. Method according to any one of the preceding claims, wherein in a step preceding step b) the number of lift-out apparatuses (22a-d) and/or retention apparatuses (24a-f) required for removing the workpiece part (14) is determined.

17. Method according to any one of the preceding claims, wherein the workpiece part (14) is received at least during part of the removal from the remaining workpiece (15) between the at least two lift-out apparatuses (22a-d) which are arranged at the lift-out positions (X_{Aa}, Y_{Aa}, ...) and the at least two retention apparatuses (24a-f) which are arranged at the retention positions (X_{Ha}, Y_{Ha}, ...) .

18. Computer program product which is constructed to carry out all the steps of the method according to any one of the preceding claims when the computer program runs on a data-processing system.

19. Apparatus for removing a workpiece part (14) from a remaining workpiece (15) comprising:
a lift-out unit (20) having at least two lift-out apparatuses (22a-d) which each have a plurality of lift-out elements (47) and a retention counter-unit (21) having at least two retention apparatuses (24a-f) which each have a plurality of retention elements (50), a lift-out apparatus movement device (26) for moving the lift-out apparatuses (22a-d) parallel with a bearing plane (18) of the remaining workpiece (15),
a retention apparatus movement device (31) for moving the retention apparatuses (24a-f) parallel with the bearing plane (18) of the remaining workpiece (15),
**characterised by** a control unit (35) for controlling the lift-out apparatus movement device (26) for moving the lift-out apparatuses (22a-d) at fixed lift-out positions (X_{Aa}, Y_{Aa}, ....) and for controlling the retention apparatus movement device (31) for moving the retention apparatuses (24a-d) at fixed retention positions (X_{Ha}, Y_{Ha}, ....), wherein the control unit (35) is constructed to fix the lift-out positions (X_{Aa}, Y_{Aa}, ....) and/or the retention positions (X_{Ha}, Y_{Ha}, ...) according to a method which comprises the following steps:
a) determining an in particular rectangular enclosing contour (36) which encloses the workpiece part (14) which is intended to be removed,
b) initially fixing lift-out positions (X_{Aa}, Y_{Aa}, ....) of at least two of the lift-out apparatuses (22a-d) and/or retention positions (X_{Ha}, Y_{Ha}, ...) of at least two of the retention apparatuses (24a-d) relative to the enclosing contour (36),
c) fixing an active region (37, 37a) for each of the lift-out apparatuses (22a-d) at the respective fixed lift-out position (X_{Aa}, Y_{Aa}, ....) thereof and/or for each of the retention apparatuses (24a-f) at the respective fixed retention position (X_{Ha}, Y_{Ha}, ...) thereof, and
d) fixing the lift-out positions (X_{Aa}, Y_{Aa}, ....) of the lift-out apparatuses (22a-d) and/or the retention positions (X_{Ha},
Y_{Ha}, ...) of the retention apparatuses (24a-d) once again based upon a partial region (38), which is positioned in the respective active region (37, 37a), of the workpiece part (14) which is intended to be removed.

20. Processing machine (1) for processing in a separating manner plate-like workpieces (15), in particular metal sheets, by means of a processing tool (3), further comprising: an apparatus (16) according to claim 19 for removing a workpiece part (14) which is separated from a remaining workpiece (15) during the separating processing operation.

## Revendications

1. Procédé pour la définition de positions de soulèvement (X_{Aa}, Y_{Aa}, ...) d'au moins deux dispositifs de soulèvement (22a-d) comprenant chacun une pluralité d'éléments de soulèvement (47) et/ou de positions de retenue (X_{Ha}, Y_{Ha}, ...) d'au moins deux dispositifs de retenue (24a-f) comprenant chacun une pluralité d'éléments de retenue (50) pour le retrait d'une partie de pièce (14) d'une pièce restante (15), les dispositifs de soulèvement (22a-d) et/ou les dispositifs de retenue (24a-f) pouvant être déplacés parallèlement à un plan de montage (18) de la partie de pièce (14) à retirer de la pièce restante (15), **caractérisé par** les étapes suivantes :
a) la détermination d'un contour d'entourage (36), notamment rectangulaire, entourant la partie de pièce à retirer (14),
b) la définition initiale de positions de soulèvement (X_{Aa}, Y_{Aa}, ...) d'au moins deux des dispositifs de soulèvement (22a-d) et/ou de positions de retenue (X_{Ha}, Y_{Ha}, ...) d'au moins d'au moins deux des dispositifs de retenue (24a-d) par rapport au contour d'entourage (36),
c) la définition d'une zone de travail (37, 37a) pour chacun des dispositifs de soulèvement (22a-d) à leur position de soulèvement définie respectivement (X_{Aa}, Y_{Aa,} ...) et/ou pour chacun des dispositifs de retenue (24a-f) à leur position de retenue définie respectivement (X_{Ha}, Y_{Ha},...), ainsi que
d) la nouvelle définition des positions de soulèvement (X_{Aa}, Y_{Aa},...) des dispositifs de soulèvement (22a-d) et/ou des positions de retenue (X_{Ha}, Y_{Ha},...) des dispositifs de retenue (24a-d) sur la base d'une zone partielle (38) de la partie de pièce à retirer (14) positionnée dans la zone de travail respective (37, 37a) .

2. Procédé selon la revendication 1, dans lequel, dans l'étape a), les positions de soulèvement (X_{Aa}, Y_{Aa}, ...) et/ou les positions de retenue (X_{Ha}, Y_{Ha},...) sont définies initialement avec des écarts identiques par rapport au contour d'entourage (36).

3. Procédé selon la revendication 1 ou 2, dans lequel, dans l'étape c), la définition des positions de soulèvement (X_{Aa}, Y_{Aa},...) et/ou des positions de retenue (X_{Ha}, Y_{Ha},...) a lieu sur la base d'au moins une propriété géométrique de la zone partielle (38) de la partie de pièce (14) se trouvant dans la zone de travail respective (37, 37a), la propriété géométrique étant de préférence un centroïde (Xs, Ys) de la zone partielle (38).

4. Procédé selon la revendication 3, dans lequel la position de soulèvement (X_{Aa}, Y_{Aa},...) et/ou la position de retenue (X_{Ha}, Y_{Ha},...) d'un dispositif de soulèvement (22a-d) et/ou d'un dispositif de retenue (24a-d) est définie en concordance avec le centroïde (Xs, Ys) de la zone partielle (38) de la partie de pièce (14) se trouvant dans la zone de travail respective (37, 37a).

5. Procédé selon l'une quelconque des revendications précédentes, dans lequel, après l'étape d), l'étape suivante est réalisée successivement pour chaque dispositif de soulèvement (22a-d) et/ou pour chaque dispositif de retenue (24a-f) :
e) la détermination d'au moins un écart (A_{AB}, A_{AC}) du dispositif de soulèvement (22a) par rapport au(x) dispositif(s) de soulèvement voisin(s) (22b-d) et/ou du dispositif de retenue (24a) par rapport (au)x dispositif(s) de retenue voisin(s) (24b-d), ainsi que, dans le cas où l'écart (A_{AB}, A_{AC}, A_{AD}, A_{AE}, A_{AF}) est inférieur à un écart minimal (A_{YM}, A_{XM}),
la modification de la position de soulèvement définie (X_{Aa}, Y_{Aa}) du dispositif de soulèvement (22a) et/ou de la ou des position(s) de soulèvement définie(s) (X_{Ab}, Y_{Ab}, ...) du ou des dispositif (s) de soulèvement voisin(s) (22b-d) et/ou
la modification de la position de retenue définie (X_{Ha}, Y_{Ha}) du dispositif de retenue (24a) et/ou de la ou des position (s) de retenue définie (s) (X_{Hb}, Y_{Hb},...) du ou des dispositif(s) de retenue voisin(s) (24b-f), jusqu'à ce que l'écart minimal (A_{YM}, A_{XM})soit atteint.

6. Procédé selon l'une quelconque des revendications précédentes, dans lequel la définition et/ou la modification de positions de soulèvement (X_{Aa}, Y_{Aa},...) des dispositifs de soulèvement (22a-d) a lieu en étapes discrètes, afin de prendre en compte des ouvertures de passage (19) d'un support de pièce (17) pour le passage d'éléments de soulèvement (47) des dispositifs de soulèvement (22a-d).

7. Procédé selon la revendication 5 ou 6, dans lequel les étapes c), d) et e) sont répétées jusqu'à ce qu'un critère de terminaison soit atteint.

8. Procédé selon la revendication 7, dans lequel une mesure pour la modification des positions de soulèvement définies (X_{Aa}, Y_{Aa},...) et/ou des positions de retenue définies (X_{Ha}, Y_{Ha}, ...) dans l'étape d) et/ou dans l'étape e) forme le critère de terminaison.

9. Procédé selon la revendication 8, dans lequel, après un nombre prédéterminé de répétitions, les positions de soulèvement définies (X_{Aa}, Y_{Aa},...) et/ou les positions de retenue définies (X_{Ha}, Y_{Ha},...) sont évaluées avec un critère d'évaluation, le critère d'évaluation étant de préférence utilisé en tant que critère de terminaison.

10. Procédé selon la revendication 9, dans lequel le critère d'évaluation pour les positions de soulèvement (X_{Aa}, Y_{Aa},...) est choisi ou peut être choisi dans le groupe comprenant : le nombre d'éléments de soulèvement actifs (47) des dispositifs de soulèvement (22a-d), la surface de l'enveloppe convexe qui est engendrée par les éléments de soulèvement actifs (47), le rapport de la force de pression (p) des éléments de soulèvement actifs (47) au poids (g) de la partie de pièce (14), l'écart maximal de tous les points quelconques de la partie de pièce (14) par rapport à un élément de soulèvement actif respectivement le plus proche (47), le fléchissement de la partie de pièce (14) lorsqu'elle est posée sur les éléments de soulèvement actifs (47) des dispositifs de soulèvement (22a-d).

11. Procédé selon la revendication 9 ou 10, dans lequel le critère d'évaluation pour les positions de retenue (X_{Ha}, Y_{Ha},...) est choisi ou peut être choisi dans le groupe comprenant : le nombre d'éléments de retenue actifs (50) des dispositifs de retenue (24a-f), la surface de l'enveloppe convexe qui est engendrée par les éléments de retenue actifs (50), le rapport de la force de retenue (h) des éléments de retenue actifs (50) au poids (g) de la partie de pièce (14), l'écart maximal de tous les points quelconques de la partie de pièce (14) par rapport à un élément de retenue actif respectivement le plus proche (50), le fléchissement de la partie de pièce (14) lorsqu'elle est retenue sur les éléments de retenue actifs (50).

12. Procédé selon l'une quelconque des revendications précédentes, dans lequel, dans l'étape c), une zone de travail (37, 37a) d'un dispositif de soulèvement respectif (22a) est définie, qui est délimitée par le contour d'entourage (36) et au moins un dispositif de soulèvement voisin (22b, 22c) et/ou dans lequel, dans l'étape c), une zone de travail (37, 37a) d'un dispositif de retenue respectif (24a) est définie, qui est délimitée par le contour d'entourage (36) et au moins un dispositif de retenue voisin (24b, 24c).

13. Procédé selon la revendication 12, dans lequel, lorsque le critère de terminaison a été atteint, une zone de travail locale plus petite (37a) pour chacun des dispositifs de soulèvement (22a-d) et/ou pour chacun des dispositifs de retenue (24a-f) est définie, les étapes c), d) et e) étant de nouveau réalisées une ou plusieurs fois jusqu'à ce qu'un critère de terminaison soit atteint.

14. Procédé selon la revendication 13, dans lequel la zone de travail locale (37a) présente des dimensions qui dépassent les dimensions du dispositif de soulèvement (22a) et/ou du dispositif de retenue (24a) d'au moins 10 % et pas de plus de 50 %.

15. Procédé selon l'une quelconque des revendications précédentes, dans lequel au moins deux des dispositifs de soulèvement (22a,b ; 22c,d) et/ou au moins deux des dispositifs de retenue (24a-f) sont couplés en déplacement par une structure porteuse commune (27a, 27b) dans une direction de déplacement (X) lors du déplacement parallèlement au plan de montage (18).

16. Procédé selon l'une quelconque des revendications précédentes, dans lequel, dans une étape précédant l'étape b), le nombre de dispositifs de soulèvement (22a-d) et/ou de dispositifs de retenue (24a-f) nécessaires pour le retrait de la partie de pièce (14) est déterminé.

17. Procédé selon l'une quelconque des revendications précédentes, dans lequel la partie de pièce (14) est reçue entre les au moins deux dispositifs de soulèvement (22a-d) agencés aux positions de soulèvement (X_{Aa}, Y_{Aa},...) et les au moins deux dispositifs de retenue (24a-f) agencés aux positions de retenue (X_{Ha}, Y_{Ha},...) pendant au moins une partie du retrait de la pièce restante (15).

18. Produit programme informatique, qui est configuré pour la réalisation de toutes les étapes du procédé selon l'une quelconque des revendications précédentes lorsque le programme informatique est exécuté sur une installation de traitement de données.

19. Dispositif pour le retrait d'une partie de pièce (14) d'une pièce restante (15), comprenant :
une unité de soulèvement (20) munie d'au moins deux dispositifs de soulèvement (22a-d), qui comprennent chacun une pluralité d'éléments de soulèvement (47), ainsi que
une unité de contre-appui (21) munie d'au moins deux dispositifs de retenue (24a-f), qui comprennent chacun une pluralité d'éléments de retenue (50),
un appareil de déplacement de dispositif de soulèvement (26) pour le déplacement des dispositifs de soulèvement (22a-d) parallèlement à un plan de montage (18) de la pièce restante (15),
un appareil de déplacement de dispositif de retenue (31) pour le déplacement des dispositifs de retenue (24a-f) parallèlement au plan de montage (18) de la pièce restante (15),
**caractérisé par** une unité de commande (35) pour la commande de l'appareil de déplacement de dispositif de soulèvement (26) pour le déplacement des dispositifs de soulèvement (22a-d) à des positions de soulèvement définies (X_{Aa}, Y_{Aa},...) et pour la commande de l'appareil de déplacement de dispositif de retenue (31) pour le déplacement des dispositifs de retenue (24a-d) à des positions de retenue définies (X_{Ha}, Y_{Ha},...), l'unité de commande (35) étant configurée pour définir les positions de soulèvement (X_{Aa}, Y_{Aa},...) et/ou les positions de retenue (X_{Ha}, Y_{Ha},...) selon un procédé qui comprend les étapes suivantes :
a) la détermination d'un contour d'entourage (36), notamment rectangulaire, entourant la partie de pièce à retirer (14),
b) la définition initiale de positions de soulèvement (X_{Aa}, Y_{Aa},...) d'au moins deux des dispositifs de soulèvement (22a-d) et/ou de positions de retenue (X_{Ha}, Y_{Ha},...) d'au moins deux des dispositifs de retenue (24a-d) par rapport au contour d'entourage (36),
c) la définition d'une zone de travail (37, 37a) pour chacun des dispositifs de soulèvement (22a-d) à leur position de soulèvement définie respectivement (X_{Aa}, Y_{Aa},...) et/ou pour chacun des dispositifs de retenue (24a-f) à leur position de retenue définie respectivement (X_{Ha}, Y_{Ha},...), ainsi que
d) la nouvelle définition des positions de soulèvement (X_{Aa}, Y_{Aa},...) des dispositifs de soulèvement (22a-d) et/ou des positions de retenue (X_{Ha}, Y_{Ha},...) des dispositifs de retenue (24a-d) sur la base d'une zone partielle (38) de la partie de pièce à retirer (14) positionnée dans la zone de travail respective (37, 37a) .

20. Machine d'usinage (1) pour l'usinage de séparation de pièces en forme de plaques (15), notamment de tôles, au moyen d'un outil d'usinage (3), comprenant en outre : un dispositif (16) selon la revendication 19 pour retirer une partie de pièce (14) séparée d'une pièce restante (15) lors de l'usinage de séparation.
